# FASCICULE DE BREVET EUROPEEN

(11) **EP 1 768 049 B1**
(45) Date de publication et mention de la délivrance du brevet: **26.06.2013**
(21) Numéro de dépôt: 06291493.2
(22) Date de dépôt: 22.09.2006
(51) Int. Cl.: G06K 9/20, G06T 5/00

(54) **Procédé et système de reproduction de documents par segmentation et amélioration sélective des images et des textes**
Verfahren und System zur Reproduktion von Dokumenten mittels Segmentierung und selektiver Verbesserung von Bildern und Texten
Process and system for reproduction of documents by segmentation and selective enhancement of images and texts

(30) Priorité: 23.09.2005 FR 0509739
(43) Date de publication de la demande: 28.03.2007
(73) Titulaire: Sagemcom Documents SAS, 92500 Rueil Malmaison (FR)
(72) Inventeur: Mitaine, Emilie, 92000 Nanterre (FR); Bentejac, Jean-Philippe, 94400 Vitry sur Seine (FR)
(74) Mandataire: Debay, Yves

(56) Documents cités:
- EP-A- 0 096 219
- EP-A- 1 304 651
- US-A- 5 872 864
- US-A1- 2001 036 314
- US-A1- 2005 013 502
- GULERYUZ O.G.: "LOW-COMPLEXITY COMPREHENSIVE LABELING ENHANCEMENT ALGORITHM FOR COMPOUND DOCUMENTS" JOURNAL OF ELECTRONIC IMAGING, vol. 13, no. 4, octobre 2004 (2004-10), pages 832-859, XP002381865
- KUO-CHIN F ET AL: "Page segmentation and identification for intelligent signal processing" SIGNAL PROCESSING, ELSEVIER SCIENCE PUBLISHERS B.V. AMSTERDAM, NL, vol. 45, no. 3, septembre 1995 (1995-09), pages 329-346, XP004002595 ISSN: 0165-1684
- PRATT W.K.: "digital image processing" 2001, JOHM WILEY AND SONS , XP002382858 * page 243 - page 258 * * page 551 - page 558 *

## Description

La présente invention concerne le domaine de l'électronique et en particulier de la reproduction numérique de documents.
Un problème dans le domaine de la reproduction numérique de documents concerne la qualité des documents obtenus. La reproduction numérique n'est pas parfaite et cette qualité est souvent insatisfaisante à cause du traitement appliqué aux documents à reproduire.
Il est connu dans l'art antérieur divers types de solutions de traitement des documents à reproduire numériquement. En général, ce traitement consiste en une augmentation du contraste du texte par rapport au fond afin d'améliorer la lisibilité du texte mais il résulte en une dégradation de la qualité des images incluses dans la zone traitée. Il est connu dans l'art antérieur, par exemple par le brevet EP1385329, une solution de traitement réalisant une classification des zones du document à reproduire en fonction de la couleur des pixels qui le composent. Ce type de solution présente l'inconvénient de ne travailler que sur la couleur et donc de ne pas discriminer une couleur appartenant à la fois à une image et à du texte. Il est également connu dans l'art antérieur, par exemple par le brevet EP1304651, des solutions travaillant sur une image en basse résolution avant de repasser sur l'image réelle et réalisant une classification des différentes zones du document grâce à différents algorithmes de segmentation successifs. Ce type de solution présente l'inconvénient de nécessiter plusieurs calculs coûteux en ressources et ne décrit pas de traitements associés aux différentes zones identifiées. Enfin, il est également connu dans l'art antérieur, par exemple par le brevet EP1304651, des solutions de classification des zones de documents en noir et blanc à reproduire par segmentation du document et utilisation d'histogrammes d'intensité de gris. Ce type de solution présente l'inconvénient de ne pas permettre de traitement des documents en couleurs sans nécessiter de calculs coûteux en ressources.

Dans ce contexte, il est intéressant de proposer une solution permettant, sans calculs excessifs, un traitement de tout type de documents pour classifier les zones de texte et d'image et réaliser un traitement adapté à ces zones identifiées.

La présente invention a pour but de pallier certains inconvénients de l'art antérieur en proposant un procédé de reproduction de documents par segmentation et amélioration sélective de zones d'image et de texte permettant, à un moindre coût de capacités de calculs, d'appliquer un traitement sélectif à différentes zones de texte et d'image identifiées au sein d'un document.

Ce but est atteint par un procédé de reproduction de documents, caractérisé, d'une part, en ce qu'il est mis en oeuvre par un système de reproduction permettant une segmentation du document par reconnaissance de zones contenant des images, dites zones d'images, et de zones contenant du texte, dites zones de texte, puis une amélioration sélective des zones d'images et des zones de texte et, d'autre part, en ce qu'il comporte les étapes successives suivantes :
- initialisation grâce, au moins, à une numérisation du document, suivie d'une réduction de la résolution et d'une conversion de la composition chromatique des pixels du document en niveaux de gris, puis d'une érosion,
- extraction de boîtes de liaison composées de pixels connectés entre eux et appartenant aux mêmes composantes connexes,
- classification des boîtes de liaison en tant que boîtes d'image ou boîtes de texte, à partir d'une pluralité de mesures relatives à la distribution obtenue sur un histogramme de répartition des intensités des différentes composantes chromatiques des pixels de chacune des zones du document correspondant aux boîtes de liaison,
- création de masques de traitement dont les pourtours sont sensiblement identiques aux pourtours des images, ces masques de traitement permettant de définir les zones d'images et de texte du document,
- traitement sélectif d'amélioration des zones de texte et des zones d'image du document par utilisation des masques de traitement, puis recombinaison des zones traitées en un document final.

Selon une autre particularité, l'étape de création de masques de traitement dont les pourtours sont sensiblement identiques aux pourtours des zones d'images du document résulte des étapes suivantes :
- création de masques initiaux de traitement autour des boîtes d'image, puis définition d'une pluralité de labels dont les données correspondent, pour chacun, à un groupe de composantes chromatiques similaires ou de nuances,
- recherche, dans chacun des masques initiaux, de portions, dites de pourtour, dont le label est identique au label du pourtour du masque initial, puis suppression de ces portions de pourtour, de façon à obtenir des masques recadrés,
- recherche, dans chacun des masques recadrés, de portions, dites bruitées, possédant une aire inférieure à une valeur prédéterminée et dans lesquelles les pixels ont des labels identiques entre eux, puis suppression de ces portions bruitées, de façon à obtenir les masques de traitement.

Selon une autre particularité, l'étape de traitement sélectif d'amélioration des zones de texte comporte une étape d'extraction des zones de texte du document sur la base des masques de traitement, suivie d'une étape d'augmentation du contraste dans chacune de ces zones de texte, puis d'une étape d'étirement d'histogrammes de répartition des intensités des différentes composantes chromatiques des pixels de ces zones de texte.

Selon une autre particularité, l'étape de traitement sélectif d'amélioration des zones d'image comporte une étape d'extraction des zones d'image du document sur la base des masques de traitement, suivie d'une étape d'étirement modéré, d'après au moins un paramètre (P) stocké dans les moyens de mémorisation, des histogrammes de répartition des intensités des différentes composantes chromatiques des pixels de chacune des zones d'image, puis d'une égalisation de ces histogrammes de répartition des intensités des différentes composantes chromatiques des pixels des zones d'image.

Selon une autre particularité, l'étape de traitement sélectif d'amélioration des zones de texte et des zones d'image comporte une étape de re-dimensionnement des masques de traitement élaborés sur la base du document numérisé dont la résolution a été réduite, de façon à permettre une mise à l'échelle de ces masques par rapport aux dimensions initiales du document à reproduire.

Selon une autre particularité, l'étape d'initialisation comporte les étapes suivantes :
- numérisation du document par un dispositif de numérisation d'image permettant l'enregistrement dans des moyens de mémorisation du système de reproduction, d'un document numérisé constitué de données numériques représentatives des composantes chromatiques du document,
- réduction de la résolution du document numérisé et enregistrement du document réduit obtenu dans les moyens de mémorisation du système de reproduction,
- conversion des composantes chromatiques du document réduit en niveaux de gris et enregistrement du document converti obtenu dans les moyens de mémorisation du système de reproduction,
- filtrage du document converti par application d'un seuil prédéterminé à la valeur d'intensité de chacun des pixels du document converti et attribution de la valeur maximale d'intensité à chacun des pixels dont la valeur d'intensité dépasse ce seuil,
- inversion du contraste du document converti et filtré, puis enregistrement du document inversé obtenu dans les moyens de mémorisation du système de reproduction,
- érosion du document inversé par utilisation d'un motif centré sur un pixel et couvrant une pluralité de pixels, cette utilisation consistant en des décalages successifs, d'un pixel à la fois, du motif au sein du document inversé, et d'une attribution, au pixel sur lequel le motif est centré à chaque décalage, de la valeur d'intensité la plus basse parmi les valeurs d'intensités des pixels couverts par le motif, puis, lorsque le motif a parcouru tout le document inversé, enregistrement du document érodé obtenu dans les moyens de mémorisation du système de reproduction.

Selon une autre particularité, l'étape d'extraction des boîtes de liaison, composées de pixels connectés entre eux et appartenant aux mêmes composantes connexes, comporte les étapes suivantes itérées jusqu'à ce que tous les pixels du document érodé aient été sélectionnés :
- sélection d'un pixel dans le document érodé,
- initialisation d'une liste de pixels voisins du pixel sélectionné, puis initialisation d'une boîte de liaison de dimensions minimum,
- parcours de la liste de pixels jusqu'à ce que tous les pixels aient été sélectionnés en évaluant leur niveau de gris et en leur attribuant une composante connexe en fonction de leurs pixels voisins successivement ajoutés à la liste,
- agrandissement de la boîte de liaison.

Selon une autre particularité, l'étape d'initialisation d'une boîte de pixel de dimensions minimum consiste en une création d'une boîte de liaison de 1 pixel.

Selon une autre particularité, l'étape d'extraction des boîtes de liaison est une méthode dite destructive de recherche de composantes connexes car cette étape utilise une image de travail et chaque étape de sélection d'un pixel s'accompagne d'un effacement du pixel sélectionné de l'image de travail.

Selon une autre particularité, l'étape de classification des boîtes de liaison en tant que boîtes d'image ou boîtes de texte comporte les étapes suivantes :
- création d'un histogramme de répartition des intensités des différentes composantes chromatiques des pixels de chacune des zones du document correspondant aux boîtes de liaison,
- mesure d'une pluralité de paramètres relatifs à la distribution obtenue sur l'histogramme,
- évaluation de la probabilité que l'histogramme obtenu et mesuré soit représentatif d'une zone de texte ou d'une zone d'image d'après une correspondance pré-établies entre les mesures de l'histogramme et la probabilité que ce dernier soit représentatif d'une zone de texte ou d'une zone d'image.

Selon une autre particularité, la pluralité de paramètres relatifs à la distribution obtenue sur l'histogramme de répartition des intensités des différentes composantes chromatiques des pixels de chacune des zones du document correspondant aux boîtes de liaison consiste en les paramètres suivants :
- position du premier pic de l'histogramme,
- largeur du premier pic,
- hauteur du premier pic,
- position du second pic de l'histogramme,
- largeur du second pic,
- hauteur du second pic,
- écart entre les pics,
- hauteur moyenne des valeurs comprises entre les pics,
- hauteur maximum des valeurs comprises entre les pics,
- hauteur moyenne des valeurs à l'extérieur des pics,
- hauteur maximum des valeurs à l'extérieur des pics.

Selon une autre particularité, l'étape d'évaluation de la probabilité que l'histogramme obtenu et mesuré soit représentatif d'une zone de texte ou d'une zone d'image est réalisée grâce à un réseau de neurones dont les entrées reçoivent les paramètres mesurés sur l'histogramme et dont la sortie représente la probabilité que l'histogramme obtenu et mesuré soit représentatif d'une zone de texte ou d'une zone d'image.

Selon une autre particularité, l'étape d'évaluation de la probabilité que l'histogramme obtenu et mesuré soit représentatif d'une zone de texte ou d'une zone d'image est réalisée grâce à une table de correspondance enregistrée dans les moyens de mémorisation du système de reproduction, cette table ayant été générée préalablement par un réseau de neurones dont les entrées reçoivent les paramètres mesurés sur l'histogramme et dont la sortie représente la probabilité que l'histogramme obtenu et mesuré soit représentatif des pixels d'une zone de texte ou d'une zone d'image.

Un autre but de la présente invention est de pallier certains inconvénients de l'art antérieur en proposant un système de reproduction de documents par segmentation et amélioration sélective de zones d'image et de texte permettant d'appliquer un traitement sélectif à différentes zones de texte et d'image identifiées au sein d'un document, avec un moindre coût de capacités de calculs, de façon à ce que le système puisse être implémenté dans un appareil de reproduction numérique de documents.

Ce but est atteint par un système de reproduction de documents, caractérisé, d'une part, en ce qu'il comporte des moyens d'effectuer une segmentation du document par reconnaissance de zones contenant des images, dites zones d'images, et de zones contenant du texte, dites zones de texte, puis une amélioration sélective des zones d'images et des zones de texte et, d'autre part, en ce qu'il comporte :
- un dispositif de numérisation générant un document numérisé constitué de données numériques représentatives des composantes chromatiques du document à reproduire,
- des moyens de traitement comportant :
   - des moyens de réduction de la résolution, associés à des moyens de conversion de la composition chromatique des pixels en niveaux de gris, associés à des moyens d'érosion du document, associés à des moyens d'extraction de boîtes de liaison composées de pixels connectés entre eux et appartenant aux mêmes composantes connexes,

   - des moyens de mesure d'histogrammes (TH) de répartition des intensités des différentes composantes chromatiques des pixels de zones du document correspondant aux boîtes de liaison (BB) et des moyens de classification des boîtes de liaison en tant que boîtes d'image ou boîtes de texte d'après ces mesures des histogrammes (TH),
   - des moyens de création de masques de traitement dont les pourtours sont sensiblement identiques aux pourtours des images,
   - des moyens de traitement sélectif d'amélioration des zones de texte et des zones d'image du document par utilisation des masques de traitement et de recombinaison des zones traitées en un document final
- des moyens de mémorisation stockant, en outre :
   - le document numérisé et les différents éléments générés par les moyens de traitement,
   - une pluralité d'algorithmes et de paramètres relatifs au moins à des seuils d'intensité des pixels, à des histogrammes de distribution d'intensités des pixels et à des composantes connexes des pixels.

Selon une autre particularité, moyens de création de masques de traitement comportent des moyens de traitement d'une pluralité de labels correspondant chacun à un groupe de composantes chromatiques similaires , ces moyens de traitement d'une pluralité de labels recherchant et supprimant, dans chacun des masques initiaux créés initialement autour des boîtes d'image, des portions dont le label est identique au label du pourtour du masque initial, de façon à obtenir des masques recadrés, puis recherchant et supprimant, dans chacun des masques recadrés, des portions possédant une aire inférieure à une valeur prédéterminée et dans lesquelles les pixels ont des labels identiques entre eux, de façon à obtenir les masques de traitement.

Selon une autre particularité, les moyens de traitement sélectif d'amélioration des zones de texte comportent :
- des moyens d'extraction des zones de texte du document sur la base des masques de traitement,
- des moyens d'augmentation du contraste dans chacune de ces zones de texte,
- des moyens de création d'histogrammes de répartition des intensités des différentes composantes chromatiques des pixels de ces zones de texte et des moyens d'étirement de ces histogrammes.

Selon une autre particularité, les moyens de traitement sélectif d'amélioration des zones d'image comportent :
- des moyens d'extraction des zones d'image du document sur la base des masques de traitement,
- des moyens de création d'histogrammes de répartition des intensités des différentes composantes chromatiques des pixels de ces zones d'image
- des moyens d'étirement modéré, d'après au moins un paramètre (P) stockédans les moyens de mémorisation, de ces histogrammes,
- des moyens d'égalisation de ces histogrammes.

Selon une autre particularité, les moyens de traitement sélectif d'amélioration des zones de texte et des zones d'image comportent des moyens de re-dimensionnement des masques de traitement élaborés sur la base du document numérisé dont la résolution a été réduite, de façon à permettre une mise à l'échelle de ces masques par rapport aux dimensions initiales du document à reproduire.

Selon une autre particularité, les moyens de traitement comportent également :
- des moyens de filtrage du document converti par les moyens de conversion en niveaux de gris, ces moyens de filtrage appliquant un seuil prédéterminé, enregistré dans les moyens de mémorisation, à la valeur d'intensité de chacun des pixels du document converti, puis attribuant la valeur maximale d'intensité à chacun des pixels dont la valeur d'intensité dépasse ce seuil.
- des moyens d'inversion du contraste du document converti.

Selon une autre particularité, les moyens d'érosion utilisent un motif stocké dans les moyens de mémorisation du système et destiné à être centré sur un pixel et couvrir une pluralité de pixels, ces moyens d'érosion effectuant des décalages successifs, d'un pixel à la fois, du motif au sein du document inversé, et une attribution, au pixel sur lequel le motif est centré à chaque décalage, de la valeur d'intensité la plus basse parmi les valeurs d'intensités des pixels couverts par le motif.

Selon une autre particularité, les moyens de classification des boîtes de liaison en tant que boîtes d'image ou boîtes de texte comportent :
- des moyens de création d'un histogramme de répartition des intensités des différentes composantes chromatiques des pixels de chacune des zones du document correspondant aux boîtes de liaison,
- des moyens de mesure d'une pluralité de paramètres relatifs à la distribution obtenue sur l'histogramme,
- des moyens d'évaluation de la probabilité que l'histogramme obtenu et mesuré soit représentatif d'une zone de texte ou d'une zone d'image.

Selon une autre particularité, les moyens d'évaluation de la probabilité que l'histogramme obtenu et mesuré soit représentatif d'une zone de texte ou d'une zone d'image consistent en un réseau de neurones dont les entrées reçoivent les paramètres mesurés sur l'histogramme et dont la sortie représente la probabilité que l'histogramme obtenu et mesuré soit représentatif d'une zone de texte ou d'une zone d'image.

Selon une autre particularité, les moyens d'évaluation de la probabilité que l'histogramme obtenu et mesuré soit représentatif d'une zone de texte ou d'une zone d'image consistent en une table de correspondance entre des valeurs des paramètres relatifs à la distribution des intensités dans l'histogramme et une probabilité que l'histogramme obtenu et mesuré par les moyens de traitement soit représentatif d'une zone de texte ou d'une zone d'image, cette table préalablement enregistrée dans les moyens de mémorisation du système de reproduction ayant été générée par un réseau de neurones dont les entrées reçoivent les paramètres mesurés sur l'histogramme et dont la sortie représente la probabilité que l'histogramme obtenu et mesuré soit représentatif des pixels d'une zone de texte ou d'une zone d'image.

Selon une autre particularité, les paramètres relatifs à l'histogramme des intensités des composantes chromatiques des pixels de chacune des zones correspondant aux boîtes de liaison consistent en les paramètres suivants :
- position du premier pic de l'histogramme,
- largeur du premier pic,
- hauteur du premier pic,
- position du second pic de l'histogramme,
- largeur du second pic,
- hauteur du second pic,
- écart entre les pics,
- hauteur moyenne des valeurs comprises entre les pics,
- hauteur maximum des valeurs comprises entre les pics,
- hauteur moyenne des valeurs à l'extérieur des pics,
- hauteur maximum des valeurs à l'extérieur des pics.

Selon une autre particularité, le système est embarqué dans un appareil de reproduction numérique de documents.

Selon une autre particularité, l'appareil de reproduction numérique est un photocopieur.

Selon une autre particularité, l'appareil de reproduction numérique est un scanner.

Selon une autre particularité, l'appareil de reproduction numérique est un fax.

D'autres particularités et avantages de la présente invention apparaîtront plus clairement à la lecture de la description ci-après, faite en référence aux dessins annexés, dans lesquels :
- la figure 1 représente le système de reproduction de documents selon un mode de réalisation de l'invention,
- la figure 2 représente le procédé de reproduction de documents selon un mode de réalisation de l'invention,
- la figure 3 représente un mode de réalisation de l'étape d'initialisation, mise en oeuvre au cours du procédé de reproduction de documents selon l'invention,
- la figure 4 représente un mode de réalisation de l'étape d'extraction de boîtes de liaison, mise en oeuvre au cours du procédé de reproduction de documents selon l'invention,
- la figure 5 représente un mode de réalisation de l'étape de classification des boîtes de liaison, mise en oeuvre au cours du procédé de reproduction de documents selon l'invention,
- la figure 6 représente un mode de réalisation de l'étape de création de masques de traitement, mise en oeuvre au cours du procédé de reproduction de documents selon l'invention,
- la figure 7 représente un mode de réalisation de l'étape de traitement sélectif d'amélioration, mise en oeuvre au cours du procédé de reproduction de documents selon l'invention.

La présente invention concerne un procédé et un système de reproduction de documents par segmentation et amélioration sélective des zones de texte et des zones d'image contenues dans les documents à reproduire. Le système selon l'invention peut consister en tout type de système informatique comportant les moyens décrits ci-après. Par exemple, selon un mode de réalisation de l'invention, le système peut être embarqué dans un appareil de reproduction numérique de documents tel qu'un photocopieur, un scanner ou un fax.

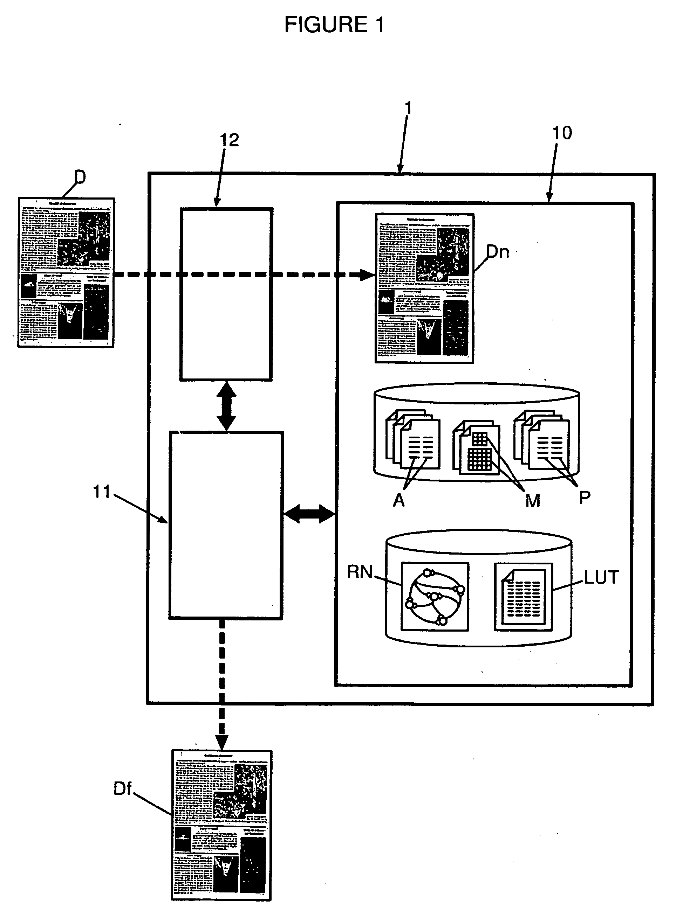

Le système (1) de reproduction de documents selon l'invention, particulièrement visible sur la figure 1, comporte des moyens d'effectuer une segmentation du document (D) par reconnaissance de zones contenant des images, dites zones d'images (IZ), et de zones contenant du texte, dites zones de texte (TZ), puis une amélioration sélective des zones d'images (IZ) et des zones de texte (TZ). En particulier, le système selon l'invention comporte un dispositif (12) de numérisation générant un document numérisé (Dn) constitué de données numériques représentatives des composantes chromatiques du document (D) à reproduire. Ce dispositif (12) de numérisation pourra naturellement consister en tout type de dispositif d'acquisition d'image tel que, par exemple, ceux présents dans les fax, les photocopieurs ou les scanners. Ces dispositifs d'acquisition d'image sont connus de l'art antérieur et aucun détail ne sera donné sur le dispositif (12) de numérisation. Le système selon l'invention comporte des moyens (11) de traitement contrôlant le dispositif (12) de numérisation et des moyens (10) de mémorisation du système (1) pour l'enregistrement des données générées. Les moyens (10) de mémorisation stockeront donc, en outre, le document numérisé (Dn) et les différents éléments générés par les moyens (11) de traitement. Ces moyens (11) de traitement contrôlent les différentes opérations du système (1) grâce à une pluralité d'algorithmes (A) et de paramètres (P) stockés dans les moyens (10) de mémorisation et concernant les différentes opérations du système. Ces algorithmes (A) et paramètres (P) concernent au moins des seuils d'intensité des pixels, des histogrammes de distribution d'intensités des pixels et des composantes connexes des pixels du document numérisé (Dn). Les moyens (11) de traitement du système (1) comportent des moyens de réduction de la résolution du document numérisé (Dn) de façon à obtenir un document réduit (Dr) pour lequel les opérations nécessaires à la reconnaissance des zones de texte (TZ) et des zones d'image (IZ) sont moins coûteuses en terme de capacités de calculs que pour le document numérisé (Dn) initial. Des moyens de conversion de la composition chromatique des pixels en niveaux de gris permettent d'obtenir un document converti (Dc) réduisant encore plus les capacités de calcul nécessaires au système. Les moyens (11) de traitement comportent également des moyens de filtrage du document (Dc) converti par les moyens de conversion en niveaux de gris. Ces moyens de filtrage appliquent un seuil à la valeur d'intensité de chacun des pixels du document converti (Dc), puis attribuent la valeur maximale d'intensité à chacun des pixels dont la valeur d'intensité dépasse ce seuil. Ce seuil pourra, par exemple, être prédéterminé et enregistré dans les moyens (10) de mémorisation du système (1). Des moyens d'inversion du contraste permettent aux moyens (11) de traitement du système d'obtenir un document inversé (Di) correspondant à un négatif du document (Dc) converti et filtré. Enfin, des moyens d'érosion permettent aux moyens (11) de traitement d'éroder le document avant de procéder à la segmentation proprement dite. Les moyens d'érosion utilisent un motif (M) stocké dans les moyens (10) de mémorisation du système (1). Ce motif (M) est destiné à être centré sur un pixel en couvrant une pluralité de pixels voisins et pourra consister, par exemple, en un carré de 3x3 pixels. Les moyens d'érosion effectuent des décalages successifs, d'un pixel à la fois, du motif (M) au sein du document inversé (Di). A chaque décalage, les moyens d'érosion attribuent au pixel sur lequel le motif (M) est centré la valeur d'intensité la plus basse parmi les valeurs d'intensités des pixels couverts par le motif (M).

Les différents moyens décrits ci-dessus permettent l'initialisation décrite ci-après en référence au procédé selon l'invention. Suite à cette initialisation, le système (1) procède à la segmentation proprement dite pour reconnaître les parties du document correspondant à du texte et les parties correspondant à des images. Pour cela, les moyens (11) de traitement du système comportent des moyens d'extraction de boîtes de liaison (BB) et des moyens de classification des boîtes de liaison (BB) en tant que boîtes d'image (IB) ou boîtes de texte (TB). Les moyens d'extraction de boîtes de liaison (BB) parcourent le document érodé (De) pour obtenir des boîtes de liaison (BB, pour l'anglais « Bounding Box ») composées de pixels connectés entre eux et appartenant aux mêmes composantes connexes. Dans un mode de réalisation, les moyens d'extraction de boîtes de liaison (BB) utilisent une méthode dite destructive de recherche de composantes connexes. Cette méthode utilise une image de travail et chaque étape de sélection d'un pixel s'accompagne d'un effacement du pixel sélectionné de l'image de travail. Dans un autre mode de réalisation, la méthode pourra naturellement être dite constructive et consister en une construction de boîtes de liaison stockée en mémoire d'après l'image érodée, sans image de travail. L'objectif de cette méthode est de retrouver toutes les composantes connexes du document (D). En ce qui concerne l'extraction des plus petites composantes connexes d'un document, on utilise en général la connexité des pixels. Une composante connexe est un ensemble de pixels groupés et qui peuvent tous s'atteindre en passant uniquement par des pixels de la même composante. Les moyens d'extraction des boîtes (BB) de liaison sont agencés pour itérer les étapes suivantes, jusqu'à ce que tous les pixels du document érodé aient été sélectionnés:
- sélection d'un pixel dans le document érodé,
- initialisation d'une liste de pixels voisins du pixel sélectionné, puis initialisation d'une boîte de liaison de dimensions minimum, par exemple de 1 pixel seulement,
- parcours de la liste de pixels jusqu'à ce que tous les pixels aient été sélectionnés en évaluant leur niveau de gris et en leur attribuant une composante connexe en fonction de leurs pixels voisins successivement ajoutés à la liste,
- agrandissement de la boîte de liaison.

Ainsi, les moyens d'extraction de boîtes (BB) de liaison sélectionneront successivement chacun des pixels du document jusqu'à ce que toutes les composantes connexes du document aient été retrouvées.

Les moyens de classification des boîtes de liaison (BB) en tant que boîtes d'image (IB) ou boîtes de texte (TB) comportent des moyens de création d'un histogramme (HBB) de répartition des intensités des différentes composantes chromatiques des pixels de chacune des zones du document (D) correspondant aux boîtes de liaison (BB). Des moyens de mesure d'une pluralité de paramètres relatifs à la distribution obtenue sur l'histogramme permettent alors une classification des boîtes de liaison (BB) en tant que boîtes d'image (IB) ou boîtes de texte (TB). Les paramètres mesurés sur les histogrammes (HBB) par ces moyens de mesure consistent, par exemple, en les paramètres suivants :
- position du premier pic de l'histogramme,
- largeur du premier pic de l'histogramme,
- hauteur du premier pic de l'histogramme,
- position du second pic de l'histogramme,
- largeur du second pic de l'histogramme,
- hauteur du second pic de l'histogramme,
- écart entre les pics,
- hauteur moyenne des valeurs comprises entre les pics,
- hauteur maximum des valeurs comprises entre les pics,
- hauteur moyenne des valeurs à l'extérieur des pics,
- hauteur maximum des valeurs à l'extérieur des pics.
A partir de ces paramètres, les moyens (11) de traitement classifient les boîtes de liaison (BB) grâce à des moyens d'évaluation de la probabilité que l'histogramme (HBB) obtenu et mesuré soit représentatif d'une zone de texte (TZ) ou d'une zone d'image (IZ). Dans un mode de réalisation de l'invention, ces moyens d'évaluation de la probabilité que l'histogramme (HBB) obtenu et mesuré soit représentatif d'une zone de texte (TZ) ou d'une zone d'image (IZ) consistent en un réseau de neurones (RN). Les paramètres et algorithmes relatifs à ce réseau de neurones (RN) sont stockés dans les moyens (10) de mémorisation du système. Les entrées du réseau de neurones (RN) reçoivent les paramètres mesurés sur l'histogramme (HBB) et la sortie du réseau (RN) représente la probabilité que l'histogramme (HBB) obtenu et mesuré soit représentatif d'une zone de texte (TZ) ou d'une zone d'image (IZ). Par exemple, le réseau de neurones (RN) pourra consister en un « Perceptron » multicouches possédant 1 couche d'entrée à 11 neurones d'entrées pour recevoir les 11 paramètres mesurés sur les histogrammes (HBB), 1 couche cachée à 14 neurones et 1 couche de sortie à 2 neurones correspondant à une sortie « texte » et une sortie « image ». Il est évident que d'autres types de réseaux neuronaux pourront remplir la même fonction et que ce mode de réalisation du réseau de neurone (RN) n'est donné qu'à titre illustratif. De plus, le réseau de neurone (RN) présenté ici est entraîné à discriminer les histogrammes (HBB) sur la base de règles d'apprentissage. Une fois le réseau (RN) entraîné, il est capable de discriminer les histogrammes et donc les différents types de boîtes sans nécessiter de règles d'apprentissage. Le réseau entraîné et validé peut donc être utilisé simplement sous la forme d'un fichier exécutable par les moyens (11) de traitement du système selon l'invention. Les moyens d'évaluation consisteront alors, dans ce mode de réalisation, en un fichier enregistré dans les moyens (10) de mémorisation du système selon l'invention et exécutable par les moyens (11) de traitement du système. Ce fichier comportera une fonction principale exécutant le réseau et les différentes étapes de calcul et permettra une classification des boîtes de liaison. Dans un autre mode de réalisation, ces moyens d'évaluation consistent en une table de correspondance (LUT) entre des valeurs des paramètres relatifs à la distribution des intensités dans l'histogramme (HBB) et une probabilité que l'histogramme (HBB) obtenu et mesuré par les moyens (11) de traitement soit représentatif d'une zone de texte (TZ) ou d'une zone d'image (IZ). Cette table (LUT) préalablement enregistrée dans les moyens (10) de mémorisation du système (1) de reproduction aura été générée par un réseau de neurones (RN) tel que celui décrit précédemment. Enfin, des moyens de création de masques de traitement (MT) permettent d'achever et de parfaire la segmentation du document. Ces moyens de création permettent de créer des masques de traitement (MT) dont les pourtours sont sensiblement identiques aux pourtours des images. Pour cela, les moyens de création de masques de traitement (MT) crée des masques initiaux (IM) dans lesquels ils regroupent plusieurs composantes chromatiques similaires ou nuances des pixels sous un label (L). Pour cela, ces moyens de création, comportent des moyens de traitement d'une pluralité de labels (L) correspondant chacun à un groupe de composantes chromatiques similaires ou de nuances. Ces moyens de traitement d'une pluralité de labels (L) recherchent et suppriment, dans chacun des masques initiaux (IM) créés initialement autour des boîtes d'image (IB), des portions dont le label (L) est identique au label (L) du pourtour du masque initial (IM), de façon à obtenir des masques recadrés (RM). Ensuite, ces moyens de traitement d'une pluralité de labels (L) recherchent et suppriment, dans chacun des masques recadrés (RM), des portions possédant une aire inférieure à une valeur prédéterminée et dans lesquelles les pixels ont des labels identiques entre eux, de façon à obtenir les masques de traitement (MT). Ainsi, des masques de traitement (MT) possédant des pourtours sensiblement identiques aux pourtours des images du document sont obtenus. Ces masques de traitement (MT) correspondent au résultat d'une segmentation précise et efficace des différentes zones de texte (TZ) et d'image (IZ) du document (D).La reproduction du document (D) avec amélioration sélective des zones de texte (TZ) et des zones d'image (IZ) peut alors être effectuée par les moyens (11) de traitement du système (1) en utilisant les masques de traitement (MT) pour traiter sélectivement les différentes zones, grâce à des moyens de traitement sélectif d'amélioration des zones de texte (TZ) et des zones d'image (IZ) du document (D). Une recombinaison des zones traitées permettra ensuite à ces moyens de traitement sélectif d'amélioration d'obtenir un document final (Df) dont les différentes zones ont été améliorées. Les moyens de traitement sélectif d'amélioration des zones de texte (TZ) et des zones d'image (IZ) comportent des moyens de re-dimensionnement des masques de traitement (MT) élaborés sur la base du document (D) numérisé dont la résolution a été réduite, de façon à permettre une mise à l'échelle de ces masques (MT) par rapport aux dimensions initiales du document (D) à reproduire. Les moyens de traitement sélectif d'amélioration des zones de texte (TZ) comportent également des moyens d'extraction des zones de texte (TZ) et des moyens d'extraction des zones d'image (IZ) sur la base des masques de traitement (MT). Des moyens d'augmentation du contraste dans chacune de ces zones de texte (TZ) permettent d'améliorer la visibilité des caractères imprimés dans les zones de texte. Des moyens de création d'histogrammes (TH) de répartition des intensités des différentes composantes chromatiques des pixels de ces zones de texte (TZ) et des moyens d'étirement de ces histogrammes permettent ensuite de parfaire la lisibilité du texte. Pour le traitement des zones d'image (IZ), les moyens de traitement sélectif d'amélioration comportent des moyens de création d'histogrammes (IH) de répartition des intensités des différentes composantes chromatiques des pixels de ces zones d'image (IZ), des moyens d'étirement modéré de ces histogrammes (IH) et des moyens d'égalisation de ces histogrammes (IH). Ainsi, les deux types de zones sont traitées sélectivement pour être améliorées dans le document final (Df).

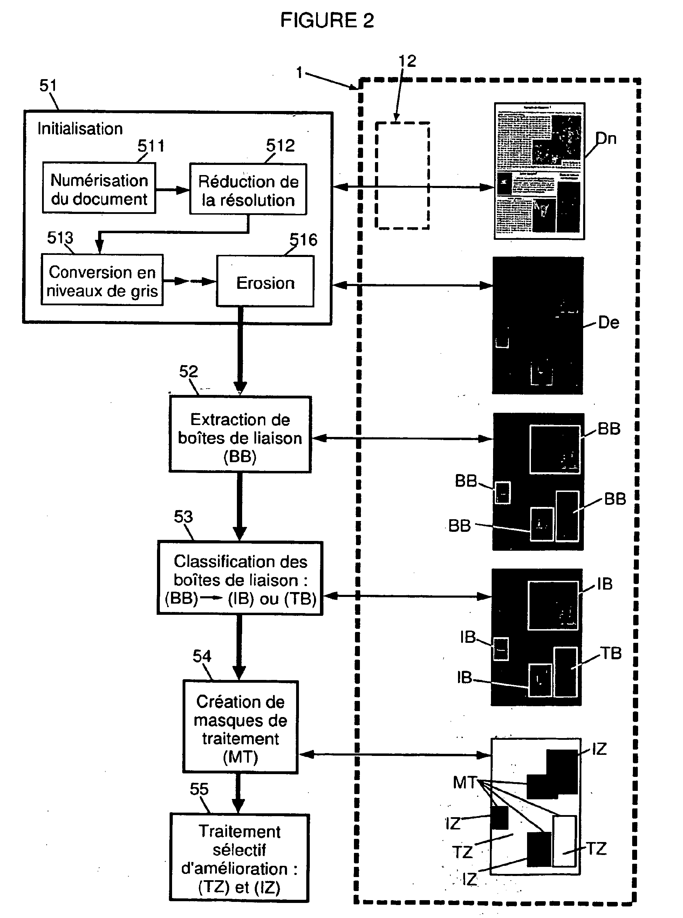

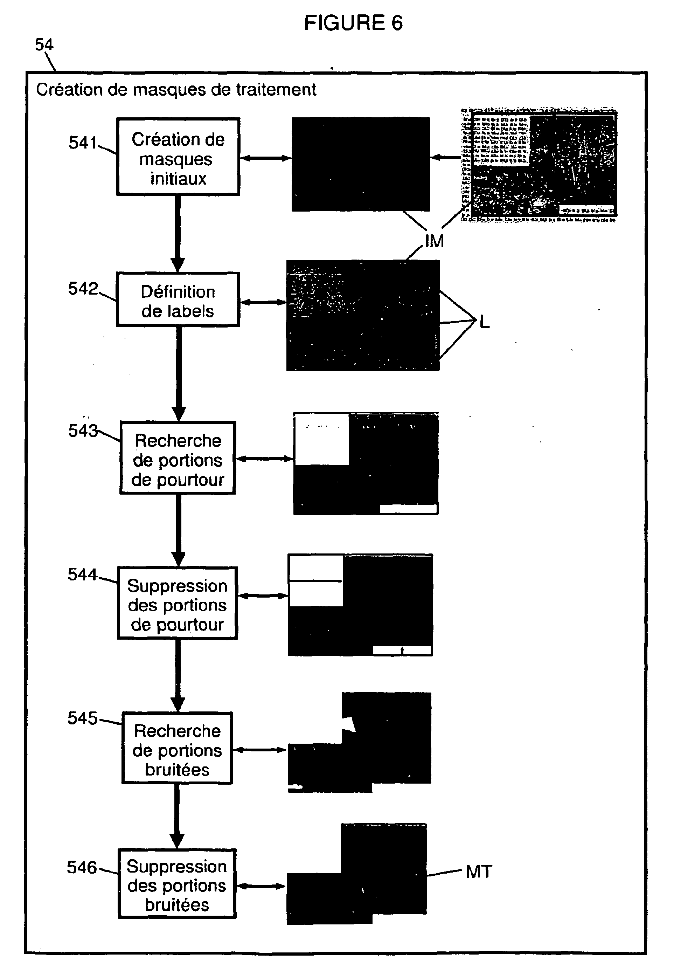

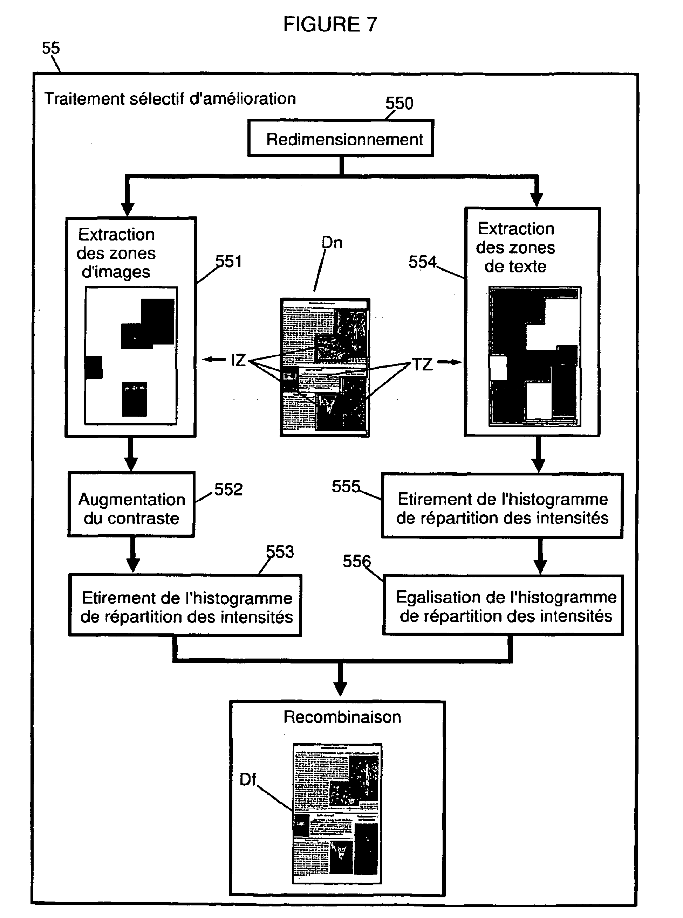

Les différents moyens du système décrits ci-dessus nécessitent peu de capacités de calcul pour une reproduction efficace d'un document avec amélioration sélective des zones de texte (TZ) et des zones d'image (IZ). Ces moyens permettent la mise en oeuvre du procédé selon l'invention, qui va maintenant être décrit en référence aux figures 2 à 7.

La figure 2 représente les principales étapes du procédé selon un mode de réalisation de l'invention. Comme suggéré précédemment, le procédé débute par une étape d'initialisation (51). Cette étape comporte une série d'étapes permettant de préparer des données représentatives du document (D) à reproduire en limitant les capacités de calcul nécessaires à la segmentation du document. L'étape d'initialisation (51) consiste au moins en une numérisation (511) du document (D), suivie d'une réduction (512) de la résolution et d'une conversion (513) de la composition chromatique des pixels du document en niveaux de gris, puis d'une érosion (516). Ensuite, une étape d'extraction (52) de boîtes de liaison (BB) composées de pixels connectés entre eux et appartenant aux mêmes composantes connexes permet de repérer des zones dans lesquelles le document ne contient pas un texte simple.

Le procédé se poursuit ensuite par une étape de classification (53) des boîtes de liaison (BB) en tant que boîtes d'image (IB) ou boîtes de texte (TB), à partir d'une pluralité de critères appliqués sur un histogramme (HBB) de répartition des intensités des différentes composantes chromatiques des pixels de chacune des zones du document (D) correspondant aux boîtes de liaison (BB). Enfin, une étape de création (54) de masques de traitement (MT) dont les pourtours sont sensiblement identiques aux pourtours des images, permet de définir les zones d'images (IZ) et de texte (TZ) du document (D) dans lesquelles une étape de traitement sélectif (55) d'amélioration pourra être réalisée. L'étape de traitement sélectif (55) d'amélioration des zones de texte (TZ) et des zones d'image (IZ) du document (D) nécessite l'utilisation des masques de traitement (MT), puis une recombinaison des zones traitées en un document final (Df).

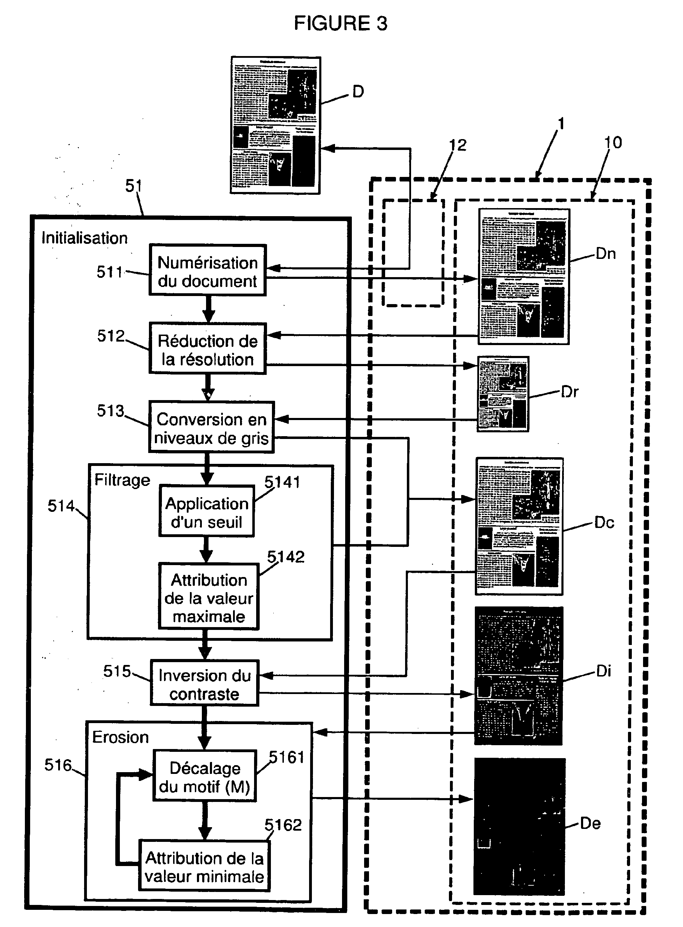

Dans un mode de réalisation de l'invention, l'étape d'initialisation comporte les étapes décrites ci-après et particulièrement visibles sur la figure 3. L'étape de numérisation (511) du document (D) par le dispositif (12) de numérisation d'image permet l'enregistrement dans des moyens (10) de mémorisation du système (1) de reproduction, d'un document numérisé (Dn) constitué de données numériques représentatives des composantes chromatiques du document (D). L'étape de réduction (512) de la résolution du document numérisé (Dn) permet l'enregistrement du document réduit (Dr) obtenu dans les moyens (10) de mémorisation du système (1) de reproduction. L'étape de conversion (513) des composantes chromatiques du document réduit (Dr) en niveaux de gris permet l'enregistrement du document converti (Dc) obtenu dans les moyens (10) de mémorisation du système (1) de reproduction. Ensuite, une étape de filtrage (514) du document converti (Dc) permet d'améliorer le document converti (Dc) grâce à une étape d'application (5141) d'un seuil prédéterminé à la valeur d'intensité de chacun des pixels du document converti (Dc) et une étape d'attribution (5142) de la valeur maximale d'intensité à chacun des pixels dont la valeur d'intensité dépasse ce seuil. Une étape d'inversion (515) du contraste du document converti et filtré (Dc) permet l'enregistrement du document inversé (Di) obtenu dans les moyens (10) de mémorisation du système (1) de reproduction. Ce document inversé sera alors utilisé lors de l'étape d'érosion (516). L'étape d'érosion du document inversé (Di) nécessite l'utilisation d'un motif (M) centré sur un pixel et couvrant une pluralité de pixels. Cette utilisation du motif (M) consistant en des décalages (5161) successifs, d'un pixel à la fois, du motif (M) au sein du document inversé (Di), et en une attribution (5162), au pixel sur lequel le motif (M) est centré à chaque décalage (5161), de la valeur d'intensité la plus basse parmi les valeurs d'intensités des pixels couverts par le motif (M). Lorsque le motif (M) a parcouru tout le document inversé (Di), l'érosion (516) s'achève par l'enregistrement du document érodé (De) obtenu dans les moyens (10) de mémorisation du système (1) de reproduction.

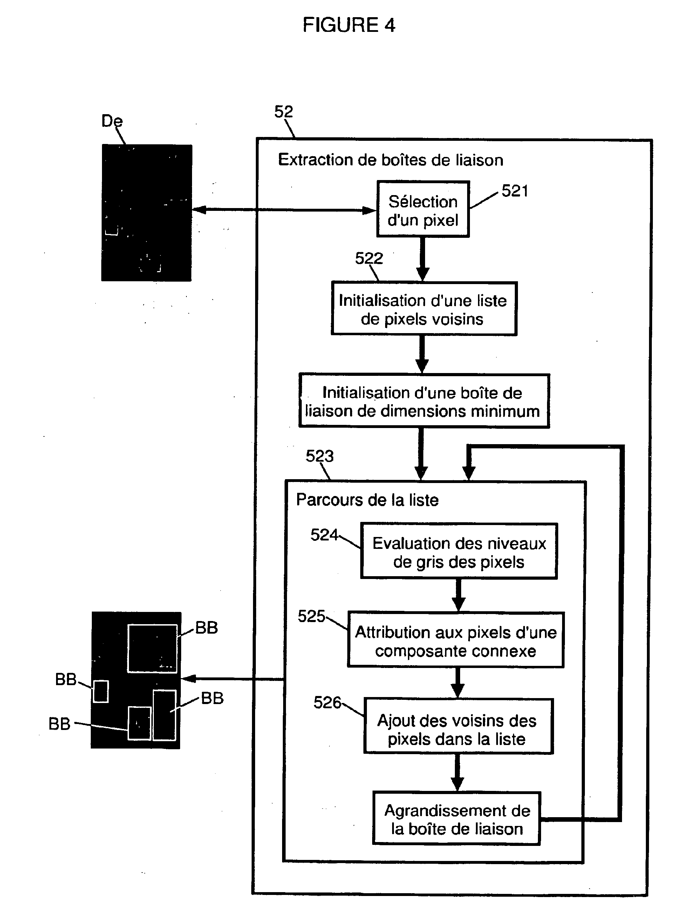

Le procédé selon l'invention se poursuit par l'étape d'extraction (52) des boîtes de liaison (BB), composées de pixels connectés entre eux et appartenant aux mêmes composantes connexes. Cette étape, détaillée sur la figure 4, comporte les étapes suivantes itérées jusqu'à ce que tous les pixels du document érodé (De) aient été sélectionnés:
- sélection (521) d'un pixel dans le document érodé (De),
- initialisation (522) d'une liste de pixels voisins du pixel sélectionné, puis initialisation d'une boîte de liaison de dimensions minimum, par exemple une boîte de 1 pixel seulement,
- parcours (523) de la liste de pixels jusqu'à ce que tous les pixels aient été sélectionnés en évaluant (524) leur niveau de gris et en leur attribuant (525) une composante connexe en fonction de leurs pixels voisins successivement ajoutés (526) à la liste,
- agrandissement de la boîte de liaison.

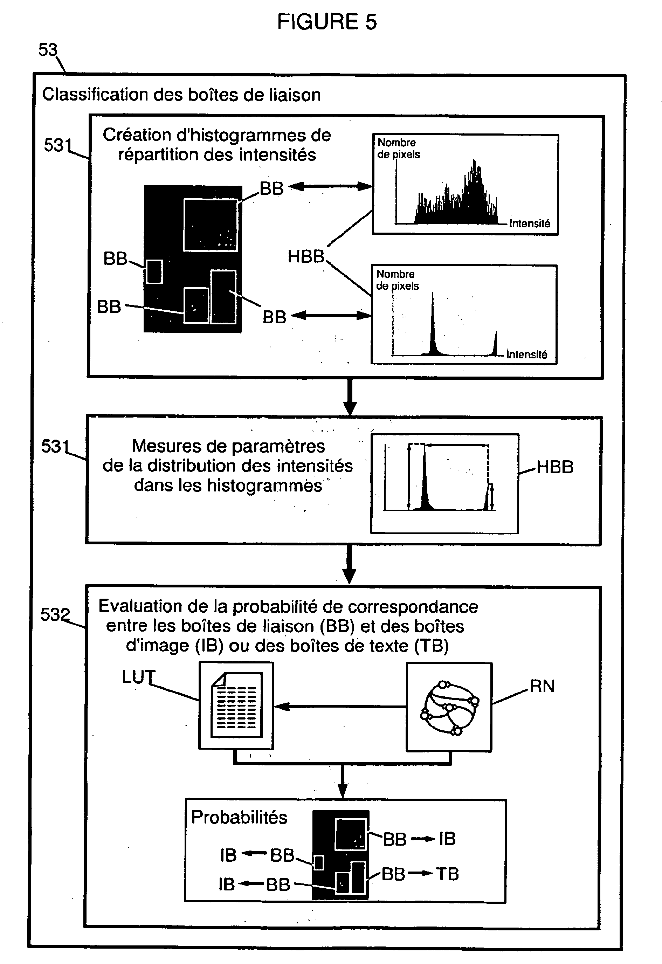

Ensuite, l'étape de classification (53) des boîtes de liaison (BB) en tant que boîtes d'image (IB) ou boîtes de texte (TB), particulièrement visible sur la figure 5, permet de reconnaître parmi les boîtes de liaison, celles contenant du texte de celles contenant des images. Cette étape de classification (53) débute par une étape de création (531) d'un histogramme (HBB) de répartition des intensités des différentes composantes chromatiques des pixels de chacune des zones du document (D) correspondant aux boîtes de liaison (BB). Ensuite, une étape de mesure (532) d'une pluralité de paramètres relatifs à la distribution obtenue sur l'histogramme permet une étape d'évaluation (533) de la probabilité que l'histogramme (HBB) obtenu et mesuré soit représentatif d'une zone de texte (TZ) ou d'une zone d'image (IZ). Cette étape d'évaluation (533) de la probabilité que l'histogramme (HBB) obtenu et mesuré soit représentatif d'une zone de texte (TZ) ou d'une zone d'image (IZ) est, dans un mode de réalisation de l'invention, réalisée grâce à un réseau de neurones (RN) dont les entrées reçoivent les paramètres mesurés sur l'histogramme (HBB) et dont la sortie représente la probabilité que l'histogramme (HBB) obtenu et mesuré soit représentatif d'une zone de texte (TZ) ou d'une zone d'image (IZ). Dans un autre mode de réalisation de l'invention, cette étape d'évaluation (533) de la probabilité que l'histogramme (HBB) obtenu et mesuré soit représentatif d'une zone de texte (TZ) ou d'une zone d'image (IZ) est réalisée grâce à une table (LUT) de correspondance enregistrée dans les moyens (10) de mémorisation du système (1) de reproduction. Cette table (LUT) pourra avoir été générée préalablement par un réseau de neurones (RN) tel que celui décrit précédemment et enregistrée dans les moyens (10) de mémorisation du système (1).

L'étape de création (54) de masques de traitement (MT) dont les pourtours sont sensiblement identiques aux pourtours des zones d'images du document (D) résulte d'une étape de création (541) de masques initiaux (IM) de traitement autour des boîtes d'image (IB), suivie d'une étape de définition (542) d'une pluralité de labels (L) dont les données correspondent, pour chacun, à un groupe de composantes chromatiques similaires ou de nuances. Ensuite une étape de recherche (543), dans chacun des masques initiaux (IM), de portions, dites de pourtour, dont le label (L) est identique au label (L) du pourtour du masque initial (IM) permet une étape de suppression (544) de ces portions de pourtour, de façon à obtenir des masques recadrés (RM). Enfin, une étape de recherche (545), dans chacun des masques recadrés (RM), de portions, dites bruitées, possédant une aire inférieure à une valeur prédéterminée et dans lesquelles les pixels ont des labels identiques entre eux, permet une étape de suppression (546) de ces portions bruitées, de façon à obtenir les masques de traitement (MT).

Le procédé peut alors s'achever par une étape de traitement sélectif (55) d'amélioration des zones de texte (TZ) et des zones d'image (IZ). Dans un mode de réalisation de l'invention, les masques de traitement (MT) ont été élaborés sur la base du document (D) numérisé dont la résolution a été réduite. L'étape de traitement sélectif (55) d'amélioration comporte alors une étape de re-dimensionnement (550) des masques de traitement (MT), de façon à permettre leur mise à l'échelle par rapport aux dimensions initiales du document (D) à reproduire. Pour le traitement des zones de texte (TZ), l'étape de traitement sélectif (55) d'amélioration comporte une étape d'extraction (551) des zones de texte (TZ) du document sur la base des masques de traitement (MT), suivie d'une étape d'augmentation (552) du contraste dans chacune de ces zones de texte (TZ), puis d'une étape d'étirement (553) d'histogrammes (TH) de répartition des intensités des différentes composantes chromatiques des pixels de ces zones de texte (TZ). Pour le traitement des zones d'image (IZ), l'étape de traitement sélectif (55) d'amélioration comporte une étape d'extraction (554) des zones d'image (IZ) du document sur la base des masques de traitement (MT), suivie d'une étape d'étirement modéré (555) des histogrammes (IH) de répartition des intensités des différentes composantes chromatiques des pixels de chacune des zones d'image (IZ), puis d'une égalisation (556) de ces histogrammes (IH) de répartition des intensités des différentes composantes chromatiques des pixels des zones d'image (IZ).

Ainsi, les zones de texte (TZ) et les zones d'image (IZ) ont été reconnues par segmentation au sein du document (D) à reproduire et traitées sélectivement par un traitement spécifique visant à améliorer leur qualité. Les différentes zones ainsi traitées peuvent alors être recombinées pour obtenir un document final (Df) entier dont les zones de texte (TZ) et les zones d'image (IZ) ont été optimisées pour la reproduction. Le document final (Df) pourra alors, de façon connue en soi, être imprimé par un dispositif d'impression présent, par exemple, dans l'appareil de reproduction dans lequel le système (1) est embarqué ou par un autre appareil de reproduction, par exemple un fax situé ailleurs.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de reproduction de documents, caractérisé, d'une part, en ce qu'il est mis en oeuvre par un système (1) de reproduction permettant une segmentation du document (D) par reconnaissance de zones contenant des images, dites zones d'images (IZ), et de zones contenant du texte, dites zones de texte (TZ), puis une amélioration sélective des zones d'images (IZ) et des zones de texte (TZ) et, d'autre part, en ce qu'il comporte les étapes successives suivantes :
- initialisation (51) grâce, au moins, à une numérisation (511) du document (D), suivie d'une réduction (512) de la résolution et d'une conversion (513) de la composition chromatique des pixels du document en niveaux de gris, puis d'une érosion (516),
- extraction (52) de boîtes de liaison (BB) composées de pixels connectés entre eux et appartenant aux mêmes composantes connexes,
- classification (53) des boîtes de liaison (BB) en tant que boîtes d'image (IB) ou boîtes de texte (TB), à partir d'une pluralité de mesures relatives à la distribution obtenue sur un histogramme (HBB) de répartition des intensités des différentes composantes chromatiques des pixels de chacune des zones du document (D) correspondant aux boîtes de liaison (BB),
- création (54) de masques de traitement (MT) dont les pourtours sont sensiblement identiques aux pourtours des images, ces masques de traitement (MT) permettant de définir les zones d'images (IZ) et de texte (TZ) du document (D),
- traitement sélectif (55) d'amélioration des zones de texte (TZ) et des zones d'image (IZ) du document (D) par utilisation des masques de traitement (MT), puis recombinaison des zones traitées en un document final (Df).

2. Procédé selon la revendication 1., **caractérisé en ce que** l'étape de création (54) de masques de traitement (MT) dont les pourtours sont sensiblement identiques aux pourtours des zones d'images du document (D) résulte des étapes suivantes :
- création (541) de masques initiaux (IM) de traitement autour des boîtes d'image (IB), puis définition (542) d'une pluralité de labels (L) dont les données correspondent, pour chacun, à un groupe de composantes chromatiques similaires ou de nuances,
- recherche (543), dans chacun des masques initiaux (IM), de portions, dites de pourtour, dont le label (L) est identique au label (L) du pourtour du masque initial (IM), puis suppression (544) de ces portions de pourtour, de façon à obtenir des masques recadrés (RM),
- recherche (545), dans chacun des masques recadrés (RM), de portions, dites bruitées, possédant une aire inférieure à une valeur prédéterminée et dans lesquelles les pixels ont des labels identiques entre eux, puis suppression (546) de ces portions bruitées, de façon à obtenir les masques de traitement (MT).

3. Procédé selon une des revendications 1 et 2., **caractérisé en ce que** l'étape de traitement sélectif (55) d'amélioration des zones de texte (TZ) comporte une étape d'extraction (551) des zones de texte (TZ) du document sur la base des masques de traitement (MT), suivie d'une étape d'augmentation (552) du contraste dans chacune de ces zones de texte (TZ), puis d'une étape d'étirement (553) d'histogrammes (TH) de répartition des intensités des différentes composantes chromatiques des pixels de ces zones de texte (TZ).

4. Procédé selon une des revendications 1 à 3., **caractérisé en ce que** l'étape de traitement sélectif (55) d'amélioration des zones d'image (IZ) comporte une étape d'extraction (554) des zones d'image (IZ) du document sur la base des masques de traitement (MT), suivie d'une étape d'étirement modéré (555), d'après au moins un paramètre (P) stocké dans les moyens de mémorisation, des histogrammes (IH) de répartition des intensités des différentes composantes chromatiques des pixels de chacune des zones d'image (IZ), puis d'une égalisation (556) de ces histogrammes (IH) de répartition des intensités des différentes composantes chromatiques des pixels des zones d'image (IZ).

5. Procédé selon une des revendications 1 à 4, **caractérisé en ce que** l'étape de traitement sélectif (55) d'amélioration des zones de texte (TZ) et des zones d'image (IZ) comporte une étape de re-dimensionnement (550) des masques de traitement (MT) élaborés sur la base du document (D) numérisé dont la résolution a été réduite, de façon à permettre une mise à l'échelle de ces masques (MT) par rapport aux dimensions initiales du document (D) à reproduire.

6. Procédé selon une des revendications 1 à 5, **caractérisé en ce que** l'étape d'initialisation (51) comporte les étapes suivantes :
- numérisation (511) du document (D) par un dispositif de numérisation d'image permettant l'enregistrement dans des moyens (10) de mémorisation du système (1) de reproduction, d'un document numérisé (Dn) constitué de données numériques représentatives des composantes chromatiques du document (D),
- réduction (512) de la résolution du document numérisé (Dn) et enregistrement du document réduit (Dr) obtenu dans les moyens (10) de mémorisation du système (1) de reproduction,
- conversion (513) des composantes chromatiques du document réduit (Dr) en niveaux de gris et enregistrement du document converti (Dc) obtenu dans les moyens (10) de mémorisation du système (1) de reproduction,
- filtrage (514) du document converti (Dc) par application (5141) d'un seuil prédéterminé à la valeur d'intensité de chacun des pixels du document converti (Dc) et attribution (5142) de la valeur maximale d'intensité à chacun des pixels dont la valeur d'intensité dépasse ce seuil,
- inversion (515) du contraste du document converti et filtré (Dc), puis enregistrement du document inversé (Di) obtenu dans les moyens (10) de mémorisation du système (1) de reproduction,
- érosion (516) du document inversé (Di) par utilisation d'un motif (M) centré sur un pixel et couvrant une pluralité de pixels, cette utilisation consistant en des décalages (5161) successifs, d'un pixel à la fois, du motif (M) au sein du document inversé (Di), et d'une attribution (5162), au pixel sur lequel le motif (M) est centré à chaque décalage (5161), de la valeur d'intensité la plus basse parmi les valeurs d'intensités des pixels couverts par le motif (M), puis, lorsque le motif (M) a parcouru tout le document inversé (Di), enregistrement du document érodé (De) obtenu dans les moyens (10) de mémorisation du système (1) de reproduction.

7. Procédé selon une des revendications 1 à 6., **caractérisé en ce que** l'étape d'extraction (52) des boîtes de liaison (BB), composées de pixels connectés entre eux et appartenant aux mêmes composantes connexes, comporte les étapes suivantes itérées jusqu'à ce que tous les pixels du document érodé (De) aient été sélectionnés:
- sélection (521) d'un pixel dans le document érodé (De),
- initialisation (522) d'une liste de pixels voisins du pixel sélectionné, puis initialisation d'une boîte de liaison de dimensions minimum,
- parcours (523) de la liste de pixels jusqu'à ce que tous les pixels aient été sélectionnés en évaluant (524) leur niveau de gris et en leur attribuant (525) une composante connexe en fonction de leurs pixels voisins successivement ajoutés (526) à la liste,
- agrandissement de la boîte de liaison.

8. Procédé selon une des revendications 1 à 7, **caractérisé en ce que** l'étape d'initialisation d'une boîte de pixel de dimensions minimum consiste en une création d'une boîte de liaison de 1 pixel.

9. Procédé selon une des revendications 1 à 8, **caractérisé en ce que** l'étape (52) d'extraction des boîtes (BB) de liaison est une méthode dite destructive de recherche de composantes connexes car cette étape utilise une image de travail et chaque étape de sélection d'un pixel s'accompagne d'un effacement du pixel sélectionné de l'image de travail.

10. Procédé selon une des revendications 1 à 9, **caractérisé en ce que** l'étape de classification (53) des boîtes de liaison (BB) en tant que boîtes d'image (IB) ou boîtes de texte (TB) comporte les étapes suivantes :
- création (531) d'un histogramme (HBB) de répartition des intensités des différentes composantes chromatiques des pixels de chacune des zones du document (D) correspondant aux boîtes de liaison (BB),
- mesure (532) d'une pluralité de paramètres relatifs à la distribution obtenue sur l'histogramme,
- évaluation (533) de la probabilité que l'histogramme (HBB) obtenu et mesuré soit représentatif d'une zone de texte (TZ) ou d'une zone d'image (IZ) d'après une correspondance pré-établies entre les mesures de l'histogramme et la probabilité que ce dernier soit représentatif d'une zone de texte (TZ) ou d'une zone d'image (IZ).

11. Procédé selon la revendication 10, **caractérisé en ce que** la pluralité de paramètres relatifs à la distribution obtenue sur l'histogramme (HBB) de répartition des intensités des différentes composantes chromatiques des pixels de chacune des zones du document (D) correspondant aux boîtes de liaison (BB) consiste en les paramètres suivants :
- position du premier pic de l'histogramme,
- largeur du premier pic,
- hauteur du premier pic,
- position du second pic de l'histogramme,
- largeur du second pic,
- hauteur du second pic,
- écart entre les pics,
- hauteur moyenne des valeurs comprises entre les pics,
- hauteur maximum des valeurs comprises entre les pics,
- hauteur moyenne des valeurs à l'extérieur des pics,
- hauteur maximum des valeurs à l'extérieur des pics.

12. Procédé selon une des revendications 10 et 11, **caractérisé en ce que** l'étape d'évaluation (533) de la probabilité que l'histogramme (HBB) obtenu et mesuré soit représentatif d'une zone de texte (TZ) ou d'une zone d'image (IZ) est réalisée grâce à un réseau de neurones (RN) dont les entrées reçoivent les paramètres mesurés sur l'histogramme (HBB) et dont la sortie représente la probabilité que l'histogramme (HBB) obtenu et mesuré soit représentatif d'une zone de texte (TZ) ou d'une zone d'image (IZ).

13. Procédé une des revendications 10 à 12, **caractérisé en ce que** l'étape d'évaluation (533) de la probabilité que l'histogramme (HBB) obtenu et mesuré soit représentatif d'une zone de texte (TZ) ou d'une zone d'image (IZ) est réalisée grâce à une table (LUT) de correspondance enregistrée dans les moyens (10) de mémorisation du système (1) de reproduction, cette table (LUT) ayant été générée préalablement par un réseau de neurones (RN) dont les entrées reçoivent les paramètres mesurés sur l'histogramme (HBB) et dont la sortie représente la probabilité que l'histogramme (HBB) obtenu et mesuré soit représentatif des pixels d'une zone de texte (TZ) ou d'une zone d'image (IZ).

14. Système (1) de reproduction de documents, caractérisé, d'une part, en ce qu'il comporte des moyens d'effectuer une segmentation du document (D) par reconnaissance de zones contenant des images, dites zones d'images (IZ), et de zones contenant du texte, dites zones de texte (TZ), puis une amélioration sélective des zones d'images (IZ) et des zones de texte (TZ) et, d'autre part, en ce qu'il comporte :
• un dispositif (12) de numérisation générant un document numérisé (Dn) constitué de données numériques représentatives des composantes chromatiques du document (D) à reproduire,
• des moyens (11) de traitement comportant :
- des moyens de réduction de la résolution, associés à des moyens de conversion de la composition chromatique des pixels en niveaux de gris, associés à des moyens d'érosion du document, associés à des moyens d'extraction de boîtes de liaison (BB) composées de pixels connectés entre eux et appartenant aux mêmes composantes connexes,
- des moyens de mesure d'histogrammes (TH) de répartition des intensités des différentes composantes chromatiques des pixels de zones du document correspondant aux boîtes de liaison (BB) et des moyens de classification des boîtes de liaison (BB) en tant que boîtes d'image (IB) ou boîtes de texte (TB) d'après ces mesures des histogrammes (TH),
- des moyens de création de masques de traitement (MT) dont les pourtours sont sensiblement identiques aux pourtours des images,
- des moyens de traitement sélectif d'amélioration des zones de texte (TZ) et des zones d'image (IZ) du document (D) par utilisation des masques de traitement (MT) et de recombinaison des zones traitées en un document final (Df)
• des moyens (10) de mémorisation stockant, en outre :
- le document numérisé (Dn) et les différents éléments générés par les moyens (11) de traitement,
- une pluralité d'algorithmes (A) et de paramètres (P) relatifs au moins à des seuils d'intensité des pixels, à des histogrammes de distribution d'intensités des pixels et à des composantes connexes des pixels.

15. Système selon la revendication 14, **caractérisé en ce que** les moyens de création de masques de traitement (MT) comportent des moyens de traitement d'une pluralité de labels (L) correspondant chacun à un groupe de composantes chromatiques similaires, ces moyens de traitement d'une pluralité de labels (L) recherchant et supprimant, dans chacun des masques initiaux (IM) créés initialement autour des boîtes d'image (IB), des portions dont le label (L) est identique au label (L) du pourtour du masque initial (IM), de façon à obtenir des masques recadrés (RM), puis recherchant et supprimant, dans chacun des masques recadrés (RM), des portions possédant une aire inférieure à une valeur prédéterminée et dans lesquelles les pixels ont des labels identiques entre eux, de façon à obtenir les masques de traitement (MT).

16. Système selon une des revendications 14 et 15, **caractérisé en ce que** les moyens de traitement sélectif d'amélioration des zones de texte (TZ) comportent :
- des moyens d'extraction des zones de texte (TZ) du document sur la base des masques de traitement (MT),
- des moyens d'augmentation du contraste dans chacune de ces zones de texte (TZ),
- des moyens de création d'histogrammes (TH) de répartition des intensités des différentes composantes chromatiques des pixels de ces zones de texte (TZ) et des moyens d'étirement de ces histogrammes.

17. Système selon une des revendications 14 à 16, **caractérisé en ce que** les moyens de traitement sélectif d'amélioration des zones d'image (IZ) comportent :
- des moyens d'extraction des zones d'image (IZ) du document sur la base des masques de traitement (MT),
- des moyens de création d'histogrammes (IH) de répartition des intensités des différentes composantes chromatiques des pixels de ces zones d'image (IZ)
- des moyens d'étirement modéré, d'après au moins un paramètre (P) stockédans les moyens de mémorisation, de ces histogrammes (IH),
- des moyens d'égalisation de ces histogrammes (IH).

18. Système selon une des revendications 14 à 17, **caractérisé en ce que** les moyens de traitement sélectif d'amélioration des zones de texte (TZ) et des zones d'image (IZ) comportent des moyens de re-dimensionnement des masques de traitement (MT) élaborés sur la base du document (D) numérisé dont la résolution a été réduite, de façon à permettre une mise à l'échelle de ces masques (MT) par rapport aux dimensions initiales du document (D) à reproduire.

19. Système selon une des revendications 14 à 18, caractérisé en ce les moyens (11) de traitement comportent également :
- des moyens de filtrage du document (Dc) converti par les moyens de conversion en niveaux de gris, ces moyens de filtrage appliquant un seuil prédéterminé, enregistré dans les moyens (10) de mémorisation, à la valeur d'intensité de chacun des pixels du document converti (Dc), puis attribuant la valeur maximale d'intensité à chacun des pixels dont la valeur d'intensité dépasse ce seuil.
- des moyens d'inversion du contraste du document converti (Dc).

20. Système selon une des revendications 14 à 19, **caractérisé en ce que** les moyens d'érosion utilisent un motif (M) stocké dans les moyens (10) de mémorisation du système (1) et destiné à être centré sur un pixel et couvrir une pluralité de pixels, ces moyens d'érosion effectuant des décalages successifs, d'un pixel à la fois, du motif (M) au sein du document inversé (Di), et une attribution, au pixel sur lequel le motif (M) est centré à chaque décalage, de la valeur d'intensité la plus basse parmi les valeurs d'intensités des pixels couverts par le motif (M).

21. Système selon une des revendications 14 à 20, **caractérisé en ce que** les moyens de classification des boîtes de liaison (BB) en tant que boîtes d'image (IB) ou boîtes de texte (TB) comportent :
- des moyens de création d'un histogramme (HBB) de répartition des intensités des différentes composantes chromatiques des pixels de chacune des zones du document (D) correspondant aux boîtes de liaison (BB),
- des moyens de mesure d'une pluralité de paramètres relatifs à la distribution obtenue sur l'histogramme,
- des moyens d'évaluation de la probabilité que l'histogramme (HBB) obtenu et mesuré soit représentatif d'une zone de texte (TZ) ou d'une zone d'image (IZ).

22. Système selon la revendication 21, **caractérisé en ce que** les moyens d'évaluation de la probabilité que l'histogramme (HBB) obtenu et mesuré soit représentatif d'une zone de texte (TZ) ou d'une zone d'image (IZ) consistent en un réseau de neurones (RN) dont les entrées reçoivent les paramètres mesurés sur l'histogramme (HBB) et dont la sortie représente la probabilité que l'histogramme (HBB) obtenu et mesuré soit représentatif d'une zone de texte (TZ) ou d'une zone d'image (IZ).

23. Système selon une des revendications 21 et 22, **caractérisé en ce que** les moyens d'évaluation de la probabilité que l'histogramme (HBB) obtenu et mesuré soit représentatif d'une zone de texte (TZ) ou d'une zone d'image (IZ) consistent en une table de correspondance (LUT) entre des valeurs des paramètres relatifs à la distribution des intensités dans l'histogramme (HBB) et une probabilité que l'histogramme (HBB) obtenu et mesuré par les moyens (11) de traitement soit représentatif d'une zone de texte (TZ) ou d'une zone d'image (IZ), cette table (LUT) préalablement enregistrée dans les moyens (10) de mémorisation du système (1) de reproduction ayant été générée par un réseau de neurones (RN) dont les entrées reçoivent les paramètres mesurés sur l'histogramme (HBB) et dont la sortie représente la probabilité que l'histogramme (HBB) obtenu et mesuré soit représentatif des pixels d'une zone de texte (TZ) ou d'une zone d'image (IZ).

24. Système selon une des revendications 21 à 23, **caractérisé en ce que** les paramètres relatifs à l'histogramme (HBB) des intensités des composantes chromatiques des pixels de chacune des zones correspondant aux boîtes de liaison (BB) consistent en les paramètres suivants :
- position du premier pic de l'histogramme,
- largeur du premier pic,
- hauteur du premier pic,
- position du second pic de l'histogramme,
- largeur du second pic,
- hauteur du second pic,
- écart entre les pics,
- hauteur moyenne des valeurs comprises entre les pics,
- hauteur maximum des valeurs comprises entre les pics,
- hauteur moyenne des valeurs à l'extérieur des pics,
- hauteur maximum des valeurs à l'extérieur des pics.

25. Système selon une des revendications 14 à 24, **caractérisé en ce qu'**il est embarqué dans un appareil de reproduction numérique de documents.

26. Système selon la revendication 25, **caractérisé en ce que** l'appareil de reproduction numérique est un photocopieur.

27. Système selon la revendication 25, **caractérisé en ce que** l'appareil de reproduction numérique est un scanner.

28. Système selon la revendication 25, **caractérisé en ce que** l'appareil de reproduction numérique est un fax.

## Patentansprüche

1. Verfahren zum Reproduzieren von Dokumenten, einerseits **dadurch gekennzeichnet, dass** es von einem Reproduziersystem (1) durchgeführt wird, das eine Segmentierung des Dokuments (D) durch Erkennen von Bereichen, die Bilder enthalten, sogenannte Bildbereiche (IZ), und Bereichen, die Text enthalten, sogenannte Textbereiche (TZ), und im Anschluss eine selektive Verbesserung der Bildbereiche (IZ) und der Textbereiche ermöglicht, und andererseits dadurch, dass es die folgenden sukzessiven Schritte aufweist:
- Initialisieren (51) mindestens aufweisend eine Digitalisierung (511) des Dokuments (D), gefolgt von einer Reduzierung (512) der Auflösung und einer Umwandlung (513) der farblichen Zusammensetzung der Pixel des Dokuments in Graustufen, und danach von einer Auswaschung (516),
- Extrahieren (52) von Bindungskästen (BB), zusammengesetzt aus Pixeln, die miteinander verbunden sind und zu den gleichen zusammenhängenden Komponenten gehören,
- Klassifizieren (52) der Bindungskästen (BB) als Bildkästen (IB) oder Textkästen (TB) ausgehend von einer Mehrzahl von Maßen relativ zu einer Verteilung, erhalten aus einem Histogramm (HBB) der Verteilung der Intensitäten von unterschiedlichen Farbkomponenten der Pixel für jeden der Bereiche des Dokuments (D), die den Bindungskästen (BB) entsprechen,
- Erzeugen (54) von Verarbeitungsmasken (MT), deren Umrisse etwa identisch zu den Umrissen der Bilder sind, wobei die Verarbeitungsmasken (MT) es ermöglichen, die Bildbereiche (IZ) und die Textbereiche (TZ) des Dokuments zu definieren,
- selektives Verarbeiten (55) zum Verbessern der Textbereiche (TZ) und der Bildbereiche (IZ) des Dokuments (D) durch Verwendung der Verarbeitungsmasken (MT), anschließend Rekombinieren der verarbeiteten Bereiche in ein finales Dokument (Df).

2. Verfahren gemäß Anspruch 1, dadurch charakterisiert, dass der Schritt des Erzeugens (54) der Verarbeitungsmasken (MT), deren Umrisse etwa identisch zu den Umrissen der Bildbereiche des Dokuments (D) sind, in den folgenden Schritten erfolgt:
- Erzeugen (541) von initialen Verarbeitungsmasken (IM) in der Umgebung der Bildkästen (IB), anschließend Definieren (542) einer Mehrzahl von Zeichen (L), von denen die Daten jeweils einer Gruppe von ähnlichen Farbkomponenten oder Nuancen entsprechen,
- Suchen (543), in jeder der initialen Masken (IM) desjenigen Umrisses, dessen Label (L) identisch ist zu dem Label (L) des Umrisses der initialen Maske (IM), anschließend Unterdrücken (544) dieser Bereiche des Umrisses, so dass zurechtgerückte Masken (RM) erhalten werden,
- Suchen (545), in jeder der zurechtgerückten Masken (RM), der sogenannten vertonten Bereiche, die eine Fläche unter deinem vorgegebenen Wert aufweisen und in denen die Pixel zueinander identische Labels haben, anschließend Unterdrücken (546) dieser vertonten Bereiche, so dass Verarbeitungsmasken (MT) erhalten werden.

3. Verfahren gemäß einem der Ansprüche 1 oder 2, dadurch charakterisiert, dass der Schritt des selektiven Verarbeitens (55) zum Verbesseren der Textbereiche (TZ) einen Schritt des Extrahierens (551) der Textbereiche (TZ) des Dokuments auf der Basis der Verarbeitungsmasken (MT), gefolgt von einem Schritt des Erhöhens (552) des Kontrasts jedes der Textbereiche (TZ), und anschließend von einem Schritt des Streckens (553) der Histogramme (TH) der Verteilung der Intensitäten von unterschiedlichen Farbkomponenten der Pixel der Textbereiche (TZ), aufweist.

4. Verfahren gemäß einem der Ansprüche 1 bis 3, **dadurch gekennzeichnet, dass** der Schritt des selektiven Verarbeitens (55) zum Verbesseren der Bildbereiche (IZ) einen Schritt des Extrahierens (554) der Bildbereiche (IZ) des Dokuments auf der Basis der Verarbeitungsmasken (MT), gefolgt von einem Schritt des maßvollen Streckens (555) gemäß mindestens einem in den Speichermitteln gespeichert Parameter (P), Histogrammen (IH) der Verteilung der Intensitäten von unterschiedlichen Farbkomponenten der Pixel jeder der Bildbereiche (IZ), und anschließend von einem Ausgleichen (556) der Histogramme (IH) der Verteilung der Intensitäten von unterschiedlichen Farbkomponenten der Pixel der Bildbereiche (IZ), aufweist.

5. Verfahren gemäß einem der Ansprüche 1 bis 4, dadurch charakterisiert, dass der Schritt des selektiven Verarbeitens zum Verbessern der Textbereiche (TZ) und der Bildbereiche (IZ) einen Schritt des Redimensionierens (550) von Verarbeitungsmasken (MT), die auf Basis des digitalisierten Dokuments, dessen Auflösung reduziert wurde, erstellt wurden, aufweist, so dass eine Normierung dieser Masken (MT) bezüglich der initialen Dimensionen des zu reproduzierenden Dokuments (D) ermöglicht wird.

6. Verfahren gemäß einem der Ansprüche 1 bis 5, dadurch charakterisiert, dass der Initialisierungsschritt (51) die folgenden Schritte aufweist:
- Digitalisieren (511) des Dokuments (D) mittels einer Bilddigitalisierungsvorrichtung, die das Aufzeichnen eines digitalisierten Dokuments (Dn), das aus digitalen Daten, die die Farbkomponenten des Dokuments (D) repräsentieren, besteht, in Speichermitteln (10) des Reproduziersystems ermöglicht,
- Reduzieren (512) der Auflösung des digitalen Dokuments (Dn) und Aufzeichnen des erhaltenen reduzierten Dokuments (Dr) in den Speichermitteln (10) des Reproduziersystems (1),
- Umwandeln (513) der Farbkomponenten des reduzierten Dokuments (Dr) in Graustufen und Aufzeichnen des erhaltenen umgewandelten Dokuments (Dc) in den Speichermitteln (10) des Reproduziersystems (1),
- Filtern (514) des umgewandelten Dokuments (Dc) durch Anwenden (5141) einer vorgegebenen Schwelle auf den Intensitätswert jedes der Pixel des umgewandelten Dokuments (Dc) und Zuweisen (5142), jedem der Pixel, dessen Intensitätswert die Schwelle überschreitet, des maximalen Intensitätswerts,
- Invertieren (515) des Kontrasts des umgewandelten und gefilterten Dokuments (Dc) und anschließend Aufzeichnen des invertierten Dokuments (Di) in den Speichermitteln (10) des Reproduziersystems (1),
- Auswaschen (516) des invertierten Dokuments (Di) unter Verwendung eines Musters (M), das über einem Pixel zentriert ist und eine Mehrzahl von Pixeln abdeckt, wobei die Verwendung aus sukzessiven Verschiebungen des Musters (M), um einen Pixels auf einmal, inmitten des invertierten Dokuments (Di), besteht, und eines Zuweisens (5162) des niedrigsten Intensitätswerts unter den Intensitätswerden der Pixel, die von dem Muster (M) bedeckt werden, und anschließend, wenn das Muster (M) das gesamte invertierte Dokument (Di) abgewandert hat, Speichern des erhaltenen ausgewaschenen Dokuments (De) in den Speichermitteln (10) des Reproduziersystems (1).

7. Verfahren gemäß einem der Ansprüche 1 bis 6, dadurch charakterisiert, dass der Extrahierschritt (52) der Bindungskästen (BB), zusammengesetzt aus Pixeln, die miteinander verbunden sind und zu den gleichen zusammenhängenden Komponenten gehören, die folgenden Schritte, die iteriert werden, bis alle Pixel des ausgewaschenen Dokuments (De) ausgewählt worden sind, aufweist:
- Auswählen (521) eines Pixels in dem ausgewaschenen Dokument (De),
- Initialisieren (552) einer Liste von benachbarten Pixeln des ausgewählten Pixels, anschließend Initialisieren eines Bindungskastens mit minimalen Dimensionen,
- Durchlaufen (523) der Liste von Pixeln bis alle Pixel ausgewählt wurden, wobei ihre Graustufe evaluiert werden (524) und ihnen eine Verbindungskomponente in Abhängigkeit ihrer benachbarten sukzessiv zu der Liste hinzugefügten (526) Pixel zugewiesen wird,
- Vergrößern des Bindungskastens.

8. Verfahren gemäß einem der Ansprüche 1 bis 7, dadurch charakterisiert, dass der Schritt des Initialisierens eines Pixelkastens mit minimalen Dimensionen aus dem Erzeugen eines Bindungskastens mit einem Pixel besteht.

9. Verfahren gemäß einem der Ansprüche 1 bis 8, dadurch charakterisiert, dass der Schritt (52) des Extrahierens des Bindungskastens (BB) ein sogenanntes destruktives Verfahren zum Suchen von Verbindungskomponenten aufweist, da dieser Schritt ein Arbeitsbild aufweist und jeder Auswahlschritt eines Pixels mit dem Löschen des ausgewählten Pixels des Arbeitsbilds einhergeht.

10. Verfahren gemäß einem der Ansprüche 1 bis 9, dadurch charakterisiert, dass der Schritt des Klassifizierens (53) der Bindungskästen (BB) als Bildkästen (IB) oder Textkästen (TB) die folgenden Schritte aufweist:
- Erzeugen (531) eines Histogramms (HBB) der Verteilung der Intensitäten von unterschiedlichen Farbkomponenten der Pixel für jeden der Bereiche des Dokuments (D), die den Bindungskästen (BB) entsprechen,
- Messen (532) einer Mehrzahl von Parametern relativ zu der aus dem Histogramm erhaltenen Verteilung,
- Evaluieren (533) der Wahrscheinlichkeit, dass das erhaltene und gemessene Histogramm (HBB) repräsentativ für einen Textbereich (TZ) oder einen Bildbereich (IZ) ist, gemäß einer vorbestimmten Korrespondenz zwischen den Maßen des Histogramms und der Wahrscheinlichkeit, dass letzteres repräsentativ für einen Textbereich (TZ) oder einen Bildbereich (IZ) ist.

11. Verfahren gemäß Anspruch 10, dadurch charakterisiert, dass die von Parametern relativ zu der aus dem Histogramm der Verteilung der Intensitäten von unterschiedlichen Farbkomponenten der Pixel für jeden der Bereiche des Dokuments (D), die den Bindungskästen (BB) entsprechen, erhaltenen Verteilung, aus den folgenden Parametern bestehen:
- Position des ersten Peaks des Histogramms,
- Größe des ersten Peaks,
- Höhe des ersten Peaks,
- Position des zweiten Peaks des Histogramms,
- Größe des zweiten Peaks,
- Höhe des zweiten Peaks,
- Abstand zwischen den Peaks,
- mittlere Höhe der Werte, die zwischen den Peaks enthalten sind,
- maximale Höhe der Werte, die zwischen den Peaks enthalten sind,
- mittlere Höhe der Werte außerhalb der Peaks,
- maximale Höhe der Werte außerhalb der Peaks.

12. Verfahren gemäß einem der Ansprüche 10 und 11, dadurch charakterisiert, dass der Evaluierschritt (533) der Wahrscheinlichkeit, dass das erhaltene und gemessene Histogramm (HBB) repräsentativ für einen Textbereich (TZ) oder einen Bildbereich (IZ) ist, mittels eines neuronalen Netzes realisiert wird, dessen Eingänge die aus dem Histogramm (HBB) gemessenen Parameter erhalten und dessen Ausgang die Wahrscheinlichkeit repräsentiert, dass das erhaltene und gemessene Histogramm (HBB) repräsentativ für einen Textbereich (TZ) oder einen Bildbereich (IZ) ist.

13. Verfahren gemäß einem der Ansprüche 10 bis 12, dadurch charakterisiert, dass der Evaluierschritt (533) der Wahrscheinlichkeit, dass das erhaltene und gemessene Histogramm (HBB) repräsentativ für einen Textbereich (TZ) oder einen Bildbereich (IZ) ist, mittels einer Korrespondenztabelle (LUT) realisiert wird, die in den Speichermitteln (10) des Reproduziersystems (1) gespeichert ist, wobei diese Tabelle (LUT) vorab mittels eines neuronalen Netzes (RN) erzeugt wurde, dessen Eingänge die aus dem Histogramm (HBB) gemessenen Parameter erhalten und dessen Ausgang die Wahrscheinlichkeit repräsentiert, dass das erhaltene und gemessene Histogramm (HBB) repräsentativ für einen Textbereich (TZ) oder einen Bildbereich (IZ) ist.

14. System (1) zum Reproduzieren von Dokumenten, einerseits **dadurch gekennzeichnet, dass** es Mittel zum Durchführen einer Segmentierung des Dokuments (D) durch Erkennen von Bereichen, die Bilder enthalten, sogenannte Bildbereiche (IZ), und Bereichen, die Text enthalten, sogenannte Textbereiche (TZ), und im Anschluss einer selektiven Verbesserung der Bildbereiche (IZ) und der Textbereiche durchführt, und andererseits dadurch, dass es aufweist:
• eine Vorrichtung (12) zum Digitalisieren, die ein digitales Dokuments (D) erzeugt, das aus digitalen Daten, die die Farbkomponenten des zu reproduzierenden Dokuments (D) repräsentieren, besteht,
• Verarbeitungsmittel (11) aufweisend:
o Mittel zum Reduzieren der Auflösung, verknüpft mit Mitteln zum Umwandeln der farblichen Zusammensetzung der Pixel des Dokuments in Graustufen, verknüpft mit Mitteln zum Auswaschen des Dokuments, verknüpft mit Mittel zum Extrahieren von Bindungskästen (BB), zusammengesetzt aus Pixeln, die miteinander verbunden sind und zu den gleichen zusammenhängenden Komponenten gehören,
o Mittel zum Messen von Histogrammen der Verteilung der Intensitäten von unterschiedlichen Farbkomponenten der Pixel für Bereiche des Dokuments, die den Bindungskästen (BB) entsprechen und Mittel zum Klassifizieren der Bindungskästen (BB) als Bildkästen (IB) oder Textkästen (TB) ausgehend von den Messungen der Histogramme (TH),
○ Mittel zum Erzeugen von Verarbeitungsmasken (MT), deren Umrisse etwa identisch zu den Umrissen der Bilder sind,
○ Mittel zum selektiven Verarbeiten zum Verbessern der Textbereiche (TZ) und der Bildbereiche (IZ) des Dokuments (D) durch Verwendung der Verarbeitungsmasken (MT) und zum Rekombinieren der verarbeiteten Bereiche in ein finales Dokument (Df)
• Speichermittel (10), die außerdem speichern:
○ das digitalisierte Dokument (Dn) und die unterschiedlichen von den Verarbeitungsmitteln (11) erzeugten Elemente,
○ eine Mehrzahl von Algorithmen (A) und von Parametern (P) bezüglich mindestens Pixel-Intensitätsschwellwerten, Histogrammen der Verteilung der Intensitäten von unterschiedlichen Farbkomponenten der Pixel und zusammenhängenden Komponenten der Pixel.

15. System gemäß Anspruch 14, dadurch charakterisiert, dass die Mittel zum Erzeugen der Verarbeitungsmasken (MT) Mittel zum Verarbeiten einer Mehrzahl von Zeichen (L), die jeweils ähnlichen Farbkomponenten entsprechen, aufweisen, wobei die Mittel zum Verarbeiten einer Mehrzahl von Zeichen (L) in jeder von initialen Verarbeitungsmasken, die am Anfang in der Umgebung der Bildkästen (IB) erzeugt wurden, Teile, deren Label (L) identisch ist zu dem Label (L) des Umrisses der initialen Maske (IM), suchen und unterdrücken, so dass zurechtgerückte Masken (RM) erhalten werden, und dann in jeder der zurechtgerückten Masken (RM) Teile suchen, die eine Fläche unter deinem vorgegebenen Wert aufweisen und in denen die Pixel zueinander identische Labels haben, suchen und unterdrücken, so dass Verarbeitungsmasken (MT) erhalten werden.

16. System gemäß einem der Ansprüche 14 oder 15, dadurch charakterisiert, dass die Mittel zum selektiven Verarbeiten zum Verbesseren der Textbereiche (TZ) aufweisen:
- Mittel zum Extrahieren der Textbereiche (TZ) des Dokuments auf der Basis der Verarbeitungsmasken (MT),
- Mittel zum Erhöhen des Kontrasts jedes der Textbereiche (TZ),
- Mittel zum Erzeugen von Histogrammen (TH) der Verteilung der Intensitäten von unterschiedlichen Farbkomponenten der Pixel der Textbereiche (TZ) und Mittel zum Strecken der Histogramme.

17. System gemäß einem der Ansprüche 14 bis 16, **dadurch gekennzeichnet, dass** die Mittel zum selektiven Verarbeiten zum Verbesseren der Bildbereiche (IZ) aufweisen:
- Mittel zum Extrahieren der Bildbereiche (IZ) des Dokuments auf der Basis der Verarbeitungsmasken (MT),
- Mittel zum Erzeugen von Histogrammen (IH) der Verteilung der Intensitäten von unterschiedlichen Farbkomponenten der Pixel der Bildbereiche (IZ)
- Mittel zum maßvollen Strecken gemäß mindestens einem in den Speichermitteln gespeichert Parameter (P), der Histogramme (IH)
- Mittel zum Ausgleichen der Histogramme (IH).

18. System gemäß einem der Ansprüche 14 bis 17, dadurch charakterisiert, dass die Mittel zum selektiven Verarbeiten zum Verbessern der Textbereiche (TZ) und der Bildbereiche (IZ) Mittel zum Redimensionieren von Verarbeitungsmasken (MT), die auf Basis des digitalisierten Dokuments, dessen Auflösung reduziert wurde, erstellt wurden, so dass eine Normierung dieser Masken (MT) bezüglich der initialen Dimensionen des zu reproduzierenden Dokuments (D) ermöglicht wird, aufweisen.

19. System gemäß einem der Ansprüche 14 bis 18, dadurch charakterisiert, dass die Verarbeitungsmittel (11) auch aufweisen:
- Mittel zum Filtern des Dokuments (Dc), das von Mitteln zum Umwandeln in Graustufen umgewandelt wurde, wobei die Mittel zum Filtern eine vorgegebene Schwelle, die in den Speichermitteln gespeichert ist, auf den Intensitätswert jedes der Pixel des umgewandelten Dokuments (Dc) anwenden und dann den maximalen Intensitätswert jedem der Pixel, dessen Intensitätswert die Schwelle überschreitet, zuweisen,
- Mittel zum Invertieren des Kontrasts des umgewandelten Dokuments (Dc).

20. System gemäß einem der Ansprüche 14 bis 19, dadurch charakterisiert, dass die Auswaschmittel ein Muster (M) verwenden, das in den Speichermitteln (10) des Systems (1) gespeichert ist und vorgesehen ist, über einem Pixel zentriert zu werden und eine Mehrzahl von Pixeln abzudecken, wobei die Auswaschmittel sukzessive Verschiebungen um einen Pixel auf einmal des Musters (M) inmitten des invertierten Dokuments (Di) und Zuweisen, an die Pixel, über die das Mittel bei jeder Verschiebung zentriert ist, des niedrigsten Intensitätswerts unter den Intensitätswerten der Pixel, die von dem Muster (M) bedeckt werden, durchführen.

21. System gemäß einem der Ansprüche 14 bis 20, dadurch charakterisiert, dass die Mittel zum Klassifizieren der Bindungskästen (BB) als Bildkästen (IB) oder Textkästen (TB) aufweisen:
- Mittel zum Erzeugen eines Histogramms (HBB) der Verteilung der Intensitäten von unterschiedlichen Farbkomponenten der Pixel für jeden der Bereiche des Dokuments (D), die den Bindungskästen (BB) entsprechen,
- Mittel zum Messen einer Mehrzahl von Parametern relativ zu der aus dem Histogramm erhaltenen Verteilung,
- Mittel zum Evaluieren der Wahrscheinlichkeit, dass das erhaltene und gemessene Histogramm (HBB) repräsentativ für einen Textbereich (TZ) oder einen Bildbereich (IZ) ist.

22. System gemäß Anspruch 21, dadurch charakterisiert, dass die Mittel zum Evaluieren der Wahrscheinlichkeit, dass das erhaltene und gemessene Histogramm (HBB) repräsentativ für einen Textbereich (TZ) oder einen Bildbereich (IZ) ist, ein neuronales Netz aufweisen, dessen Eingänge die aus dem Histogramm (HBB) gemessenen Parameter erhalten und dessen Ausgang die Wahrscheinlichkeit repräsentiert, dass das erhaltene und gemessene Histogramm (HBB) repräsentativ für einen Textbereich (TZ) oder einen Bildbereich (IZ) ist.

23. System gemäß einem der Ansprüche 21 und 22, dadurch charakterisiert, dass die Mittel zum Evaluieren der Wahrscheinlichkeit, dass das erhaltene und gemessene Histogramm (HBB) repräsentativ für einen Textbereich (TZ) oder einen Bildbereich (IZ) ist, eine Korrespondenztabelle (LUT) zwischen Parametern bezüglich der Verteilung von Intensitäten in dem Histogramm (HBB) und einer Wahrscheinlichkeit, dass das von den Verarbeitungsmitteln (11) erhaltene und gemessene Histogramm (HBB) repräsentativ für einen Textbereich (TZ) oder einen Bildbereich (IZ) ist, aufweist, wobei die Tabelle (LUT), die vorab in den Speichermitteln (10) des Reproduziersystems (1) gespeichert wird, mittels eines neuronalen Netzes (RN) erzeugt wurde, dessen Eingänge die aus dem Histogramm (HBB) gemessenen Parameter erhalten und dessen Ausgang die Wahrscheinlichkeit repräsentiert, dass das erhaltene und gemessene Histogramm (HBB) repräsentativ für einen Textbereich (TZ) oder einen Bildbereich (IZ) ist.

24. System gemäß einem der Ansprüche 21 bis 23, dadurch charakterisiert, dass die von Parametern relativ zu der aus dem Histogramm der Verteilung der Intensitäten von unterschiedlichen Farbkomponenten der Pixel für jeden der Bereiche des Dokuments (D), die den Bindungskästen (BB) entsprechen, erhaltenen Verteilung, aus den folgenden Parametern bestehen:
- Position des ersten Peaks des Histogramms,
- Größe des ersten Peaks,
- Höhe des ersten Peaks,
- Position des zweiten Peaks des Histogramms,
- Größe des zweiten Peaks,
- Höhe des zweiten Peaks,
- Abstand zwischen den Peaks,
- mittlere Höhe der Werte, die zwischen den Peaks enthalten sind,
- maximale Höhe der Werte, die zwischen den Peaks enthalten sind,
- mittlere Höhe der Werte außerhalb der Peaks,
- maximale Höhe der Werte außerhalb der Peaks.

25. System gemäß einem der Ansprüche 14 bis 24, dadurch charakterisiert, dass es in einem Apparat zur digitalen Reproduktion von Dokumenten installiert ist.

26. System gemäß Anspruch 25, dadurch charakterisiert, dass der Apparat zur digitalen Reproduktion von Dokumenten ein Fotokopierer ist.

27. System gemäß Anspruch 25, dadurch charakterisiert, dass der Apparat zur digitalen Reproduktion von Dokumenten ein Scanner ist.

28. System gemäß Anspruch 25, dadurch charakterisiert, dass der Apparat zur digitalen Reproduktion von Dokumenten ein Faxgerät ist.

## Claims

1. Method of reproduction of documents, characterised firstly in that it is implemented by a reproduction system (1) which enables a segmentation of the document (D) by recognition of zones containing images, referred to as image zones (IZ), and zones containing text, referred to as text zones (TZ), then a selective enhancement of the image zones (IZ) and the text zones (TZ), and secondly in that it includes the follwing successive steps:
- initialisation (51) by means of at least a digitisation (511) of the document (D), followed by a reduction (512) of the resolution and a conversion (513) of the chromatic composition of the pixels of the document into greyscale, then erosion (516),
- extraction (52) of bounding boxes (BB) composed of pixels connected to one another and belonging to the same connected components,
- classification (53) of the bounding boxes (BB) as image boxes (IB) or box of text (TB), on the basis of a plurality of measurements relating to the distribution obtained on a histogram (HBB) for the distribution of the intensities of the different chromatic components of the pixels of each of the zones of the document (D) corresponding to the bounding boxes (BB),
- creation (54) of processing masks (MT) of which the perimeters are substantially identical to the perimeters of the images, these processing masks (MT) enabling definition of the image zones (IZ) and text zones (TZ) of the document (D),
- selective processing (55) of enhancement of the text zones (TZ) and the image zones (IZ) of the document (D) by use of processing masks (MT), then recombination of the processed zones into a final document (Df).

2. Method as claimed in Claim 1, **characterised in that** the step of creation (54) of processing masks (MT) of which the perimeters are substantially identical to the perimeters of the image zones of the document (D) results from the following steps:
- creation (541) of initial processing masks (IM) around the image boxes (IB), then definition (542) of a plurality of labels (L) of which the data correspond in each case to a group of similar chromatic components or shades,
- searching (543), in each of the initial masks (1M), for portions, referred to as perimeter portions, of which the label (L) is identical to the label (L) of the perimeter of the initial mask (IM), then deletion (544) of these perimeter portions, in such a way as to obtain reframed masks (RM),
- searching (545), in each of the reframed masks (RM), for portions, referred to as noise portions, having an area less than a predetermined value and in which the pixels have labels identical to one another, then deletion (546) of these noise portions, in such a way as to obtain the processing masks (MT).

3. Method as claimed in any one of Claims 1 and 2, **characterised in that** the selective processing step (55) of enhancement of the text zones (TZ) includes a step of extraction (551) of the text zones (TZ) of the document on the basis of the processing masks (MT), followed by a step of augmentation (552) of the contrast in each of these text zones (TZ), then a step of expansion (553) of histograms (TH) of distribution of the intensities of the different chromatic components of the pixels of these text zones (TZ).

4. Method as claimed in any one of Claims 1 and 3, **characterised in that** the selective processing step (55) of enhancement of the text zones (TZ) includes a step of extraction (554) of the text zones (TZ) of the document on the basis of the processing masks (MT), followed by a step of augmentation (555) of the contrast in each of these text zones (TZ), then a step of expansion (556) of histograms (TH) of distribution of the intensities of the different chromatic components of the pixels of these text zones (TZ).

5. Method as claimed in any one of Claims 1 to 4, **characterised in that** the selective processing step (55) of enhancement of the text zones (TZ) and the image zones (IZ) includes a step of re-dimensioning (550) of the processing masks (MT) developed on the basis of the digitised document (D) of which the resolution has been reduced, in such a way as to enable a scaling of these masks (MT) relative to the initial dimensions of the document (D) to be reproduced.

6. Method as claimed in any one of Claims 1 to 5, **characterised in that** the initialisation step (51) includes the following steps:
- digitisation (511) of the document (D) by an image digitisation device enabling recording in memory means (10) of the reproduction system (1) of a digitised document (Dn) consisting of digital data representing chromatic components of the document (D),
- reduction (512) of the resolution of the digitised document (Dn) and recording of the reduced document (Dr) thus obtained in the memory means (10) of the reproduction system (1),
- conversion (513) of the chromatic components of the reduced documents into greyscale and recording of the converted document (Dc) thus obtained in the memory means (10) of the reproduction system (1),
- filtering (514) of the converted document (Dc) by application (5141) of a predetermined threshold to the intensity value of each of the pixels of the converted document (Dc) and allocation (5142) of the maximum intensity value to each of the pixels of which the intensity value exceeds this threshold,
- reversal (515) of the contrast of the converted and filtered document (Dc), then recording of the reversed document (Di) thus obtained in the memory means (10) of the reproduction system (1),
- erosion (516) of the reversed document (Di) by use of a motif (M) centred on a pixel and covering a plurality of pixels, this use consisting of successive offsets (5161), by one pixel at a time, of the motif (M) within the reversed document (Di), and allocation (5162), to the pixel on which the motif (M) is centred at each offset (5161), of the lowest intensity value among the intensity values of the pixels covered by the motif (M), then, when the motif (M) has travelled over the entire reversed document (Di), recording of the eroded document (De) thus obtained in the memory means (10) of the reproduction system (1).

7. Method as claimed in any one of Claims 1 to 6, **characterised in that** the step of extraction (52) of the bounding boxes (BB), composed of pixels which are connected to one another and belonging to the same connected components, includes the following steps iterated until all of the pixels of the eroded document (De)have been selected:
- selection (521) of a pixel in the eroded document (De),
- initialisation (522) of a listing of pixels neighbouring the selected pixel, then initialisation of a bounding box of minimum dimensions,
- travelling (523) over the list of pixels until all the pixels have been selected by evaluating (524) their grey scale and allocating them (525) a connected component as a function of their neighbouring pixels successively added (526) to the list,
- enlargement of the bounding box.

8. Method as claimed in any one of Claims 1 to 7, **characterised in that** the step of initialisation of a pixel box of minimum dimensions consists of creating a bounding box of 1 pixel.

9. Method as claimed in any one of Claims 1 to 8, **characterised in that** the step (52) of extraction of the bounding boxes (BB) is a so-called destructive method of searching for connected components since this step uses a working image and each step of selection of a pixel is accompanied by erasure of the selected pixel of the working image.

10. Method as claimed in any one of Claims I to 9, **characterised in that** the step of classification (53) of the bounding boxes (BB) as image boxes (IB) or text boxes (TB) includes the following steps:
- creation (531) of a histogram (HBB) for the distribution of the intensities of the different chromatic components of the pixels of each of the zones of the document (D) corresponding to the bounding boxes (BB),
- measurement (532) of a plurality of parameters relating à the dispensing obtained on the histogram,
- evaluation (533) of the probability that the histogram (Hb) obtained and measured represents a text zone (TZ) or an image zone (IZ) based on a pre-established match between the measurements of the histogram and the probability that this latter represents a text zone (TZ) or an image zone (IZ).

11. Method as claimed in Claim 10, **characterised in that** the plurality of parameters relating to the distribution obtained on the histogram (HBB) of distribution of the intensities of the different chromatic components of the pixels of each of the zones of the document (D) corresponding to the bounding boxes (BB),
- position of the first peak of the histogram,
- width of the first peak,
- height of the first peak,
- position of the second peak of the histogram,
- width of the second peak,
- height of the second peak,
- deviation between the peaks,
- mean height of the values between the peaks;
- maximum height of the values between the peaks;
- mean height of the values outside the peaks;
- maximum height of the values outside the peaks.

12. Method as claimed in any one of Claims 10 and 11, **characterised in that** the step of evaluation (533) of the probability that the histogram (Hb) obtained and measured represents a text zone (TZ) or an image zone (IZ) is performed by means of a neural network (RN) of which the inputs receive the parameters measured on the histogram (HBB) and of which the output represents the probability that the histogram (HBB) obtained and measured represents a text zone (TZ) or an image zone (IZ).

13. Method as claimed in any one of Claims 10 to 12, **characterised in that** the step of evaluation (533) of the probability that the histogram (Hb) obtained and measured represents a text zone (TZ) or an image zone (IZ) is performed by means of a lookup table (LUT) recorded in the memory means (10) of the reproduction system (1), this lookup table (LUT) having been generated previously by a neural network (RN) of which the inputs receive the parameters measured on the histogram (HBB) and of which the output represents the probability that the histogram (HBB) obtained and measured represents the pixels of a text zone (TZ) or an image zone (IZ).

14. System (1) for reproduction of documents, characterised firstly in that it includes means for effecting a segmentation of the document (D) by recognition of zones containing images, referred to as image zones (IZ), and zones containing text, referred to as text zones (TZ), then a selective enhancement of the image zones (IZ) and the text zones (TZ), and secondly in that it includes:
• a digitisation device (12) which generates a digitised document (Dn) consisting of digital data representing the chromatic components of the document (D) to be reproduced,
• processing means (11) including:
- means for reduction of the resolution which are assocated with means for conversion of the chromatic composition of the pixels into grey scale, assocaited with meas for erosion of the document, associated with means for extraction of bounding boxes (BB) composed of pixels connected to one another and belonging to the same connected components,
- means for measurement of histograms (TH) of distribution of the intensities of the different chromatic components of the pixels of zones of the document corresponding to the bounding boxes (BB) and means for classification of the bounding boxes (BB) as image boxes (IB) ot text boxes (TB) according to these measurements of the histograms (TH),
- means for creation of processing masks (MT) of which the perimeters are substantially identical to the perimeters of the images,
- means for selective processing (55) of enhancement of the text zones (TZ) and the image zones (IZ) of the document (D) by use of processing masks (MT) and recombination of the processed zones into a final document (Df),
• memory means (10) which also store:
- the digitised document (Dn) and the different elements generated by the processing means (11),
- a plurality of algorithms (A) and of parameters (P) relating at least to thresholds of intensity of the pixels, to histograms of distribution of intensities of pixels and to connected components of the pixels.

15. System as claimed in Claim 14, **characterised in that** the means for creation of processing masks (MT) comprise means for processing a plurality of labels (L) each corresponding to a group of similar chromatic components, these means for processing a plurality of labels (L) searching for and deleting, in each of the initial masks (IM) created initially around image boxes (IB), portions of which the label (L) is identical to the label (L) of the perimeter of the initial mask (IM), in such a way as to obtain reframed masks (RM), then searching for and deleting, in each of the reframed masks (RM), portions having an area smaller than a predetermined value and in which the pixels have labels which are identical to one another, in such a way as to obtain the processing masks (MT).

16. System as claimed in any one of Claims 14 and 15, **characterised in that** the selective processing means for enhancement of the text zones (TZ) include:
- means for extraction of the text zones (TZ) of the document on the basis of the processing masks (MT),
- means for augmentation of the contrast in each of these text zones (TZ),
- means for creation of histograms (TH) of distribution of the intensities of the different chromatic components of the pixels of these text zones (TZ) and means for expansion of these histograms.

17. System as claimed in any one of Claims 14 and 16, **characterised in that** the selective processing means for enhancement of the text zones (TZ) include:
- means for extraction of the text zones (TZ) of the document on the basis of the processing masks (MT),
- means for creation of histograms (TH) of distribution of the intensities of the different chromatic components of the pixels of these image zones (IZ),
- means for moderate expansion, according to at least one parameter(P) stored in the memory means, of these histograms (IH),
- means for equalisation of these histogram (IH).

18. System as claimed in any one of Claims 14 to 17, **characterised in that** the selective processing means for enhancement of the text zones (TZ) and the image zones (IZ) include means for re-dimensioning of the processing masks (MT) developed on the basis of the digitised document (D) of which the resolution has been reduced, in such a way as to enable a scaling of these masks (MT) relative to the initial dimensions of the document (D) to be reproduced.

19. System as claimed in any one of Claims 14 and 18, **characterised in that** the selective processing means also include:
- means for filtering (514) the converted document (Dc) by the means for conversion into grey scale, these filtering means applying a predetermined threshold recorded in the memory means (10) to the intensity value of each of the pixels of the converted document (Dc), then allocating the maximum intensity value to each of the pixels of which the intensity value exceeds this threshold,
- means for reversal of the contrast of the converted document (Dc).

20. System as claimed in any one of Claims 14 to 19, **characterised in that** the means for erosion use a motif (M) stored in the memory means (10) of the system (1) and intended to be centred on a pixel and cover a plurality of pixels, these erosion means effecting successive offsets, by one pixel at a time, of the motif (M) within the reversed document (Di), and allocation, to the pixel on which the motif (M) is centred at each offset, of the lowest intensity value among the intensity values of the pixels covered by the motif (M).

21. System as claimed in any one of Claims 14 to 20, **characterised in that** the means for classification (53) of the bounding boxes (BB) as image boxes (IB) or text boxes (TB) include:
- means for creation of a histogram (HBB) for the distribution of the intensities of the different chromatic components of the pixels of each of the zones of the document (D) corresponding to the bounding boxes (BB),
- means for measurement of a plurality of parameters relating to the distribution obtained on the histogram,
- of means for evaluation of the probability that the histogram HBB obtained and measured represents a text zone (TZ) or an image zone (IZ).

22. System as claimed in Claim 21, **characterised in that** the means for evaluation of the probability that the histogram (HBB) obtained and measured represents a text zone (TZ) or an image zone (IZ) consist of a neural network (RN) of which the inputs receive the parameters measured on the histogram (HBB) and of which the output represents the probability that the histogram (HBB) obtained and measured represents a text zone (TZ) or an image zone (IZ).

23. System as claimed in any one of Claims 21 and 22, **characterised in that** the means for evaluation of the probability that the histogram (HBB) obtained and measured represents a text zone (TZ) or an image zone (IZ) consist of a lookup table (LUT) for matches betwenn values of the parameters relating to the distribution of the intensities in the histogram (HBB) and a probability that the histogram (HBB) obtained and measured by the processing means (11) represents a text zone (TZ) or an image zone (IZ), this table (LUT) previously recorded in the memory means (10) of the reproduction system (1) having been generated by a neural network (RN) of which the inputs receive the parameters measured on the histogram (HBB) and of which the output represents the probability that the histogram (HBB) obtained and measured represents the pixels of a text zone (TZ) or an image zone (IZ).

24. System as claimed in any one of Claims 21 to 23, **characterised in that** the parameters relating to the histogram (HBB) of the intensities of the chromatic components of the pixels of each of the zones corresponding to the bounding boxes (BB) consist of the following parameters:
- position of the first peak of the histogram,
- width of the first peak,
- height of the first peak,
- position of the second peak of the histogram,
- width of the second peak,
- height of the second peak,
- deviation between the peaks,
- mean height of the values between the peaks;
- maximum height of the values between the peaks;
- mean height of the values outside the peaks;
- maximum height of the values outside the peaks.

25. System as claimed in any oneof Claims 14 to 24, **characterised in that** it is fitted in an apparatus for digital reproduction of documents.

26. System as claimed in Claim 25, **characterised in that** the digital reproduction apparatus is a photocoper.

27. System as claimed in Claim 25, **characterised in that** the digital reproduction apparatus is a photocoper.

28. System as claimed in Claim 25, **characterised in that** the digital reproduction apparatus is a fax machine.
